# EUROPEAN PATENT SPECIFICATION

(11) **EP 1 495 915 B1**
(45) Date of publication and mention of the grant of the patent: **01.04.2015**
(21) Application number: 03720902.0
(22) Date of filing: 14.04.2003
(51) Int. Cl.: B60R 16/02, B60R 16/04, G01C 21/00, H02J 9/00

(54) **POWER SUPPLY MANAGEMENT SYSTEM FOR VEHICLE MOUNTED APPARATUS**
STROMVERSORGUNGSMANAGEMENTSYSTEM FÜR EINE AM FAHRZEUG MONTIERTE VORRICHTUNG
SYSTEME DE GESTION D'ALIMENTATION POUR DISPOSITIF INSTALLE SUR UN VEHICULE

(30) Priority: 12.04.2002 JP 2002111097; 27.06.2002 JP 2002188577; 27.06.2002 JP 2002188624
(43) Date of publication of application: 12.01.2005
(73) Proprietor: AISIN AW CO., LTD., Anjo-shi, Aichi 444-1192 (JP)
(72) Inventor: YAMADA, Kunihiro, Okazaki-shi, Aichi 444-8564 (JP); OGAWA, Satoshi, Okazaki-shi, Aichi 444-8564 (JP); SUZUKI, Nobuo, Okazaki-shi, Aichi 444-8564 (JP); NAKAJIMA, Akihiro, Okazaki-shi, Aichi 444-8564 (JP)
(74) Representative: TBK
(86) International application number: PCT/JP2003/004713
(87) International publication number: WO 2003/086820

(56) References cited:
- WO-A1-00/42689
- FR-A- 2 730 959
- JP-A- 5 157 030
- JP-A- 5 336 252
- JP-A- 10 208 194
- JP-A- 11 093 478
- JP-A- 11 135 155
- JP-A- 55 151 773
- JP-A- 2000 285 968
- JP-A- 2001 098 812
- US-A- 5 332 958
- US-A1- 2001 040 503

## Description

### FIELD OF THE INVENTION

The present invention relates to a power supply management system for an on-board device.

### BACKGROUND OF THE INVENTION

Conventionally, systems have been provided for a vehicle with a mounted navigation device in which a driver transmits route guidance information data to the navigation device in advance such that it is possible to start guidance in accordance with the transmitted route guidance information data when the driver gets in the vehicle and starts driving (refer to Japanese Patent Laid-Open Publications Hei 6-243395 and Hei 9-189566). In this case, while the vehicle is parked, the driver can use a personal computer, or the like, in their home or at their office, and conduct a route search by imputing a target destination, search conditions, or the like. The found route guidance data is then transmitted to the navigation device wirelessly, or the like. Accordingly, when the driver gets in to the vehicle and starts to drive, they can use the route guidance immediately.

However, with such conventional systems, while the vehicle is parked, vehicle on-board devices like the navigation device, an on-board audio device, and the like, are operated. As a result, it is necessary to supply electric power to the vehicle on-board devices. However, since an engine of the vehicle is generally stopped while the vehicle is parked, an alternator that is attached to the engine is also stopped. Accordingly, it becomes necessary to utilize a vehicle battery as a power supply, but the capacity of the vehicle battery is limited.

To address this, a system has been proposed (refer to Japanese Patent Laid-Open Publication Hei 10-290193) in which vehicle on-board devices are placed in a sleep mode so as to reduce consumed electric power during parking, and then at a predetermined timing, the vehicle on-board devices are caused to be operated using a timer. In addition, a system has been proposed (refer to Japanese Patent Laid-Open Publication Hei 10-241095) in which in order to inhibit deterioration of the vehicle battery, a state of charge of the vehicle battery is monitored from outside of the vehicle, and, as necessary, the engine is started so as to cause the alternator to operate and the vehicle battery to be recharged. In this case, the state of charge of the vehicle battery can be monitored with a road side information processing device, by executing communication between the road side information processing device, which is provided in the home or elsewhere, and an on-board information processing device.

In order to execute communication between the road side information processing device and the on-board information processing device, the on-board information processing device must constantly be on stand-by for communication; in other words, the on-board information processing device needs to be in a communication-capable state. However, since the on-board vehicle processing device is on stand-by for communication, electric power is consumed.

In order to address the above described problems of the conventional systems, it is an object of the invention to provide a power supply management system for an on-board device which, when required by a user of the on-board device and when a power supply is capable of supplying electric power, makes it possible to execute remote control operation of the on-board device by supplying electric power to a communication device so as to place it in a communication-capable state. Further, when not required by the user of the on-board device and when the power supply is not capable of supplying electric power, it is possible to inhibit discharge of a vehicle battery that acts as the power supply by interrupting supply of electric power to the communication device.

### DISCLOSURE OF THE INVENTION

Accordingly, a power supply management system for an on-board device, includes: a start-up control portion that controls start-up of an on-board device; a start-up request receiving portion that, upon receipt of a start-up request from outside of the on-board device, causes the start-up control portion to start up, at the least, a portion of the on-board device; an intention determination portion that determines whether a user has a remote control operation intention; and a power supply control portion that, when the intention determination portion determines that the user has the remote control operation intention, permits supply of electric power to the start-up request receiving portion.

Another power supply management system for an on-board device according to the invention, includes: a start-up control portion that controls start-up of an on-board device; a data signal receiving portion that, upon receipt of a data signal from outside of the on-board device, causes the start-up control portion to start up, at the least, a portion of the on-board device; an intention determination portion that determines whether a user has a remote control operation intention; and a power supply control portion that, when the intention determination portion determines that the user has the remote control operation intention, permits supply of electric power to the data signal receiving portion.

According to yet another power supply management system for an on-board device of the invention, the on-board device is a vehicular navigation device, and the data signal receiving portion is a portion of a wireless LAN device.

Yet another power supply management system for an on-board device according to the invention, includes an on-board device which is provided with the start-up control portion, the data signal receiving portion and the power supply control portion, and a center server that is provided with the intention determination portion.

According to yet another power supply management system for an on-board device of the invention, the intention determination portion determines whether or not the remote control operation intention exists based upon a condition set by the user.

According to yet another power supply management system for an on-board device of the invention, the condition relates to a position.

According to yet another power supply management system for an on-board device of the invention, the intention determination portion determines that the user has the remote control operation intention when a present position of a vehicle is within a registered position area.

According to yet still another power supply management system for an on-board device of the invention, the condition relates to a time-date.

According to yet still another power supply management system for an on-board device of the invention, the intention determination portion determines that the user has the remote control operation intention when it is a predetermined time-date.

Yet still another power supply management system for an on-board device according to the invention, includes: a start-up control portion that controls start-up of an on-board device; a start-up request receiving portion that, upon receipt of a start-up request from outside of the on-board device, causes the start-up control portion to start up, at the least, a portion of the on-board device; a power supply capability determination portion that determines whether a power supply has electric power supply capability; and a power supply control portion that, when the power supply capability determination portion determines that the power supply has electric power supply capability, permits supply of electric power to the start-up request receiving portion.

Yet still another power supply management system for an on-board device according to the invention, includes: a start-up control portion that controls start-up of an on-board device; a data signal receiving portion that, upon receipt of a data signal from outside of the on-board device, causes the start-up control portion to start up, at the least, a portion of the on-board device; a power supply capability determination portion that determines whether a power supply has electric power supply capability; and a power supply control portion that, when the power supply capability determination portion determines that the power supply has electric power supply capability, permits supply of electric power to the data signal receiving portion.

According to yet still another power supply management system for an on-board device of the invention, the on-board device is a vehicular navigation device, and the data signal receiving portion is a portion of a wireless LAN (Local Area Network) device.

Yet still another power supply management system for an on-board device according to the invention, includes: an on-board device that is provided with the start-up control portion, the data signal receiving portion and the power supply control portion, and a center server that is provided with a power supply capability determination portion.

According to yet still another power supply management system for an on-board device of the invention, the power supply capability determination portion determines whether there is electric power supply capability based upon an environmental condition.

According to yet still another power supply management system for an on-board device of the invention, the environmental condition is an outside temperature.

According to yet still another power supply management system for an on-board device of the invention, the power supply capability determination portion determines whether there is electric power supply capability based upon information indicating capability of the power supply.

According to yet still anther power supply management system for an on-board device of the invention, the information is an inter-terminal voltage of the power supply, and when the inter-terminal voltage is equal to or more than a predetermined value, it is determined that there is electric power supply capability.

According to yet still another power supply management system for an on-board device of the invention, the information is an electrolyte volume of the power supply, and when the electrolyte volume is equal to or more than a predetermined value, it is determined that there is electric power supply capability.

According to yet still another power supply management system for an on-board device of the invention, the information is a usage period of the power supply, and when the usage period is equal to or shorter than a predetermined value, it is determined that there is electric power supply capability.

### BRIEF DESCRIPTION OF THE DRAWINGS

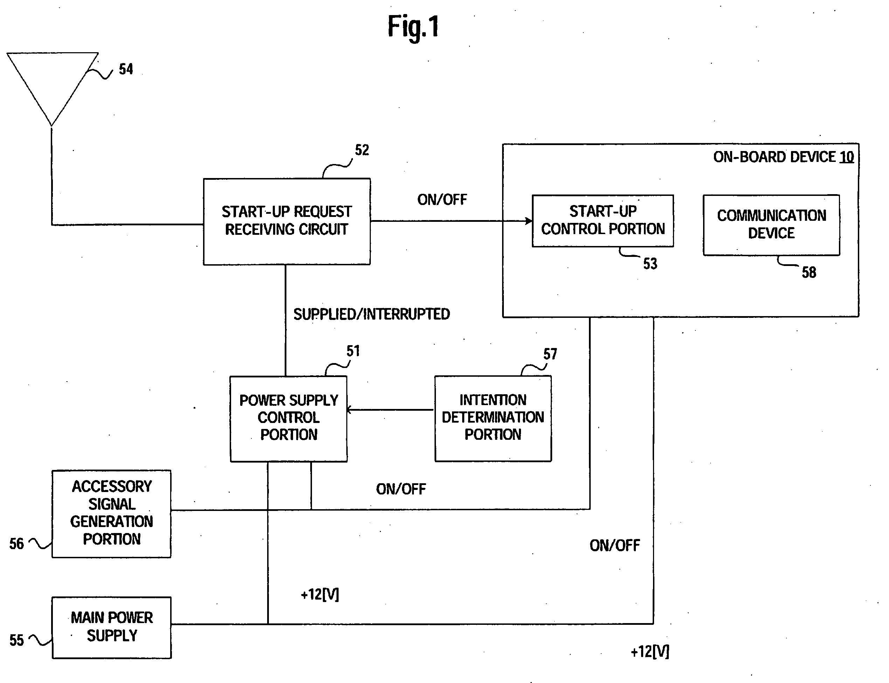

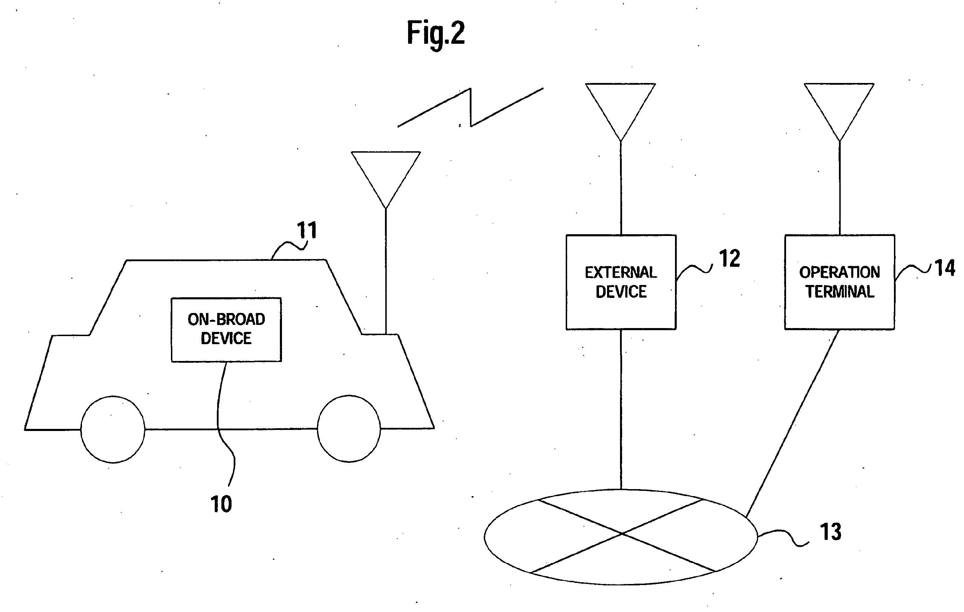

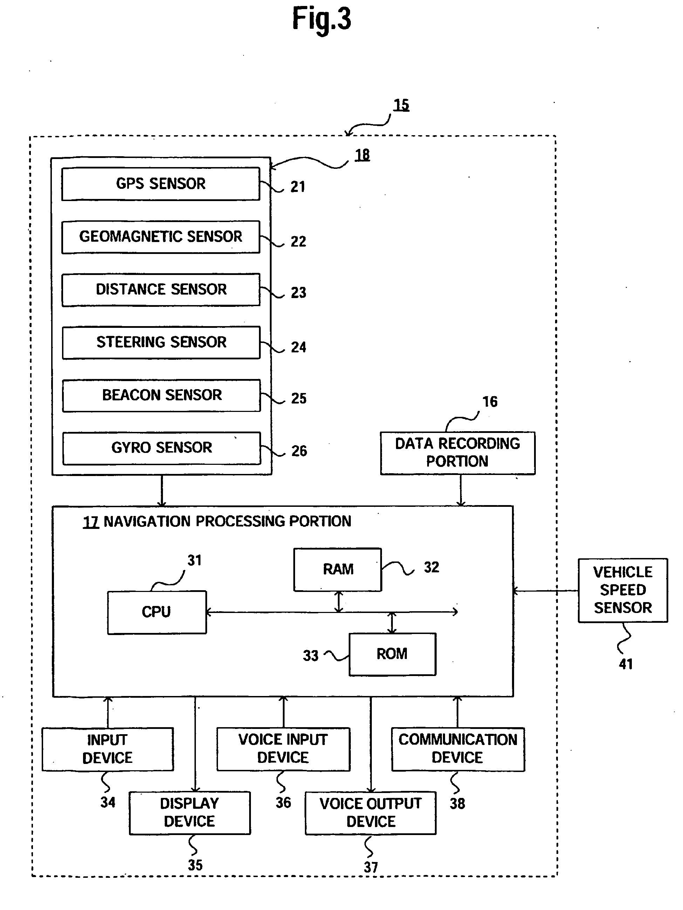

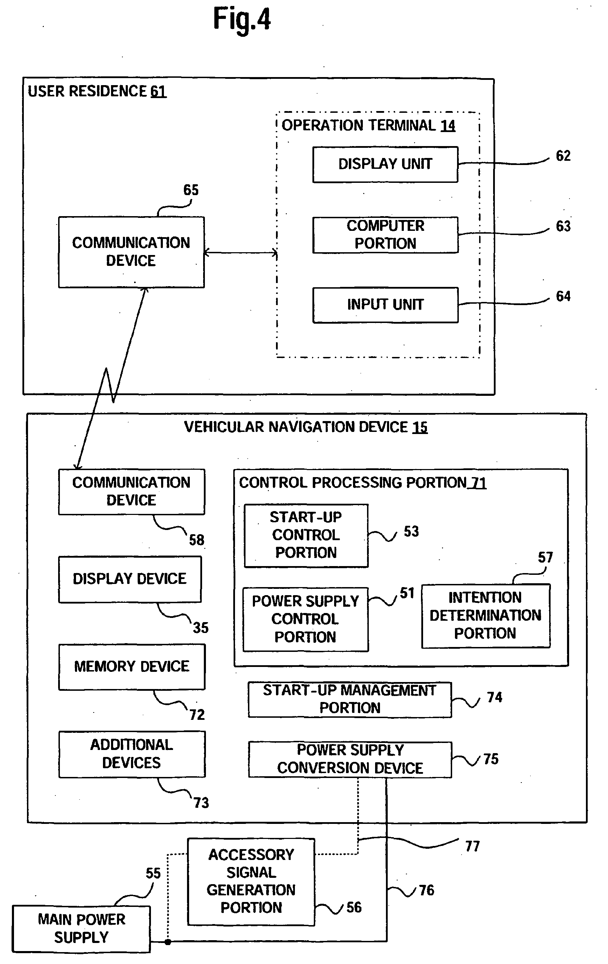

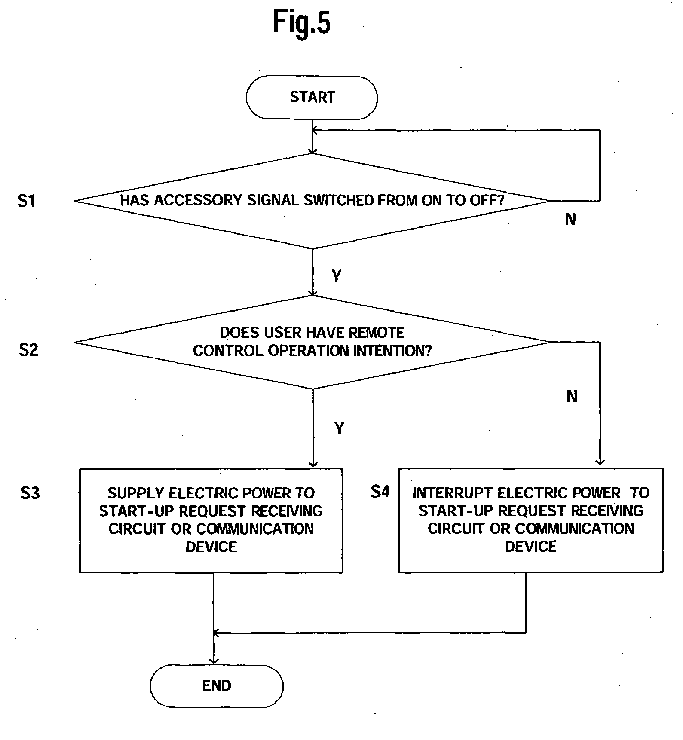

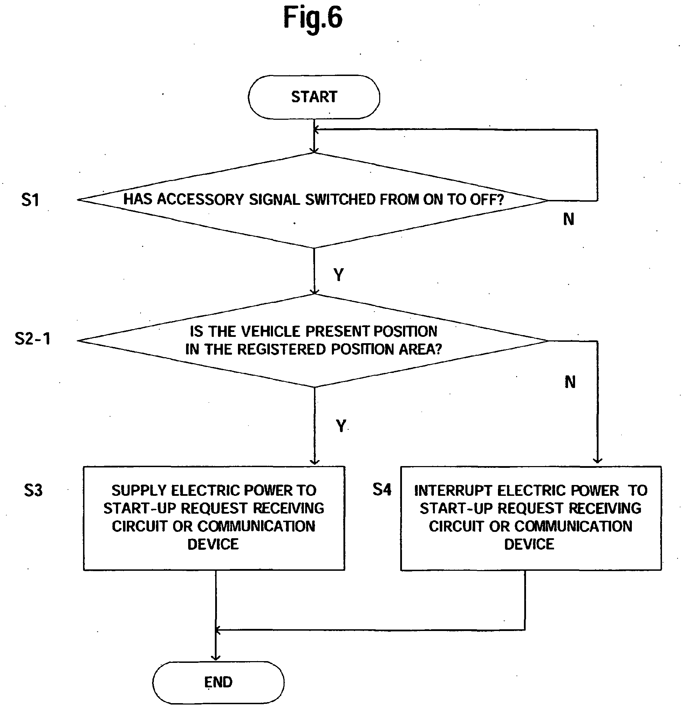

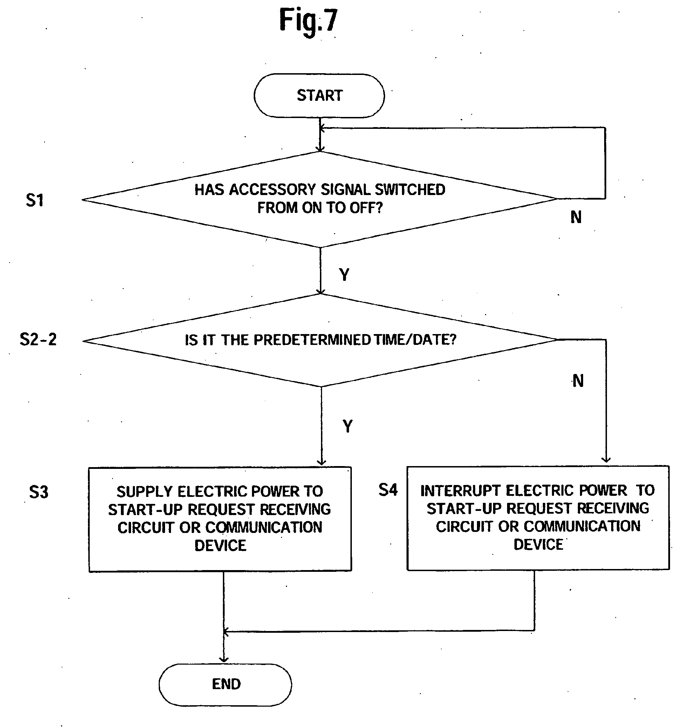

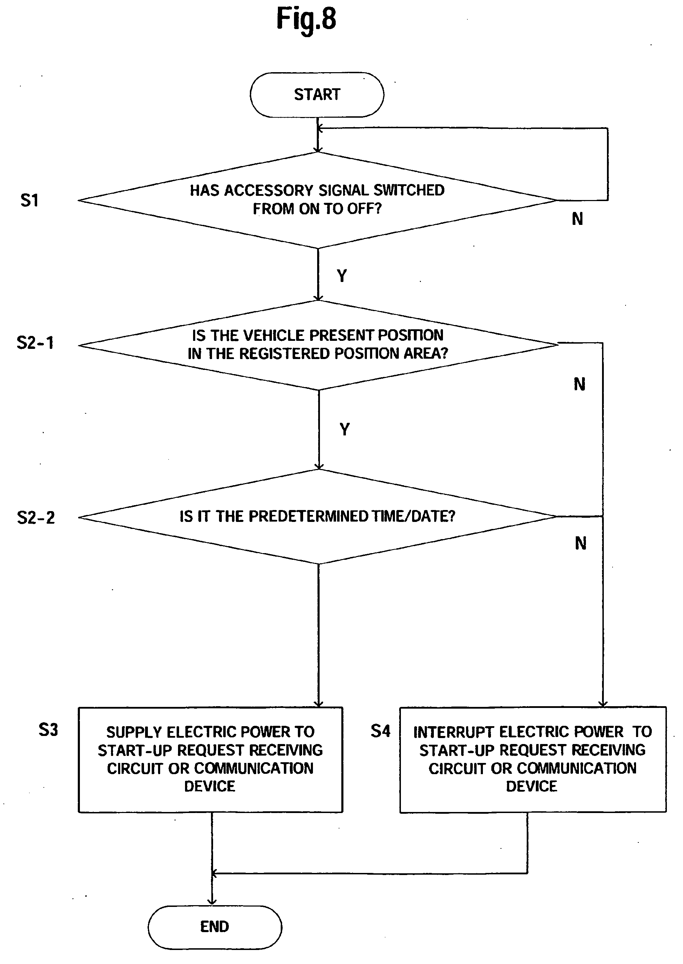

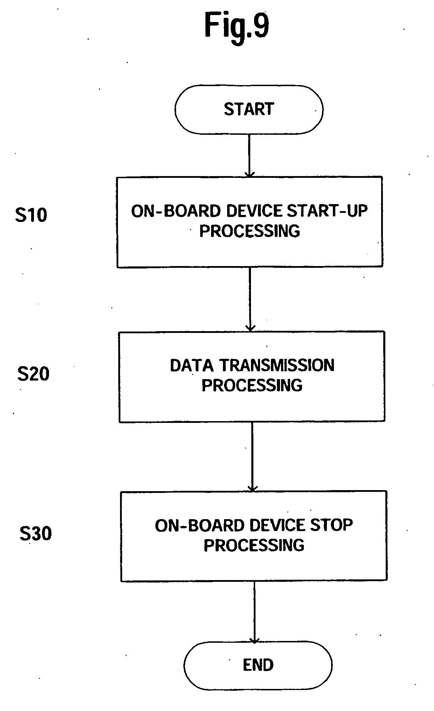

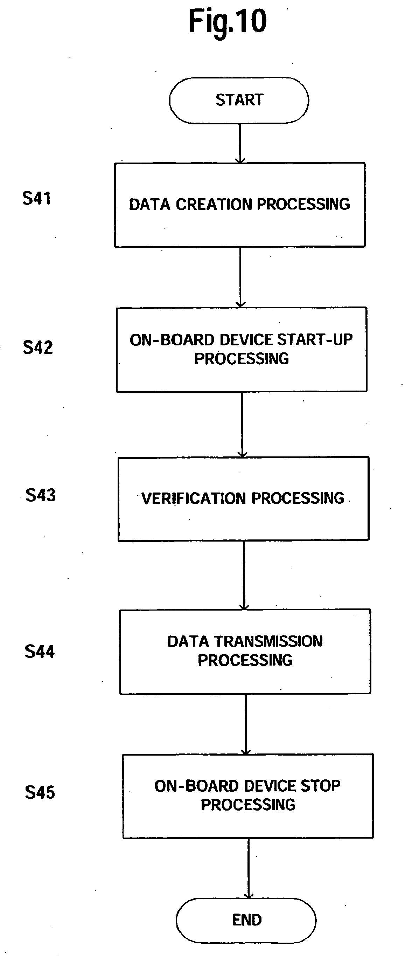

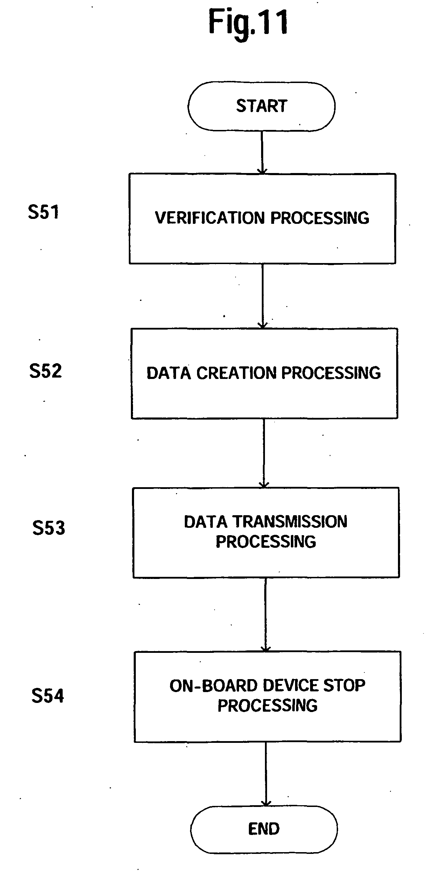

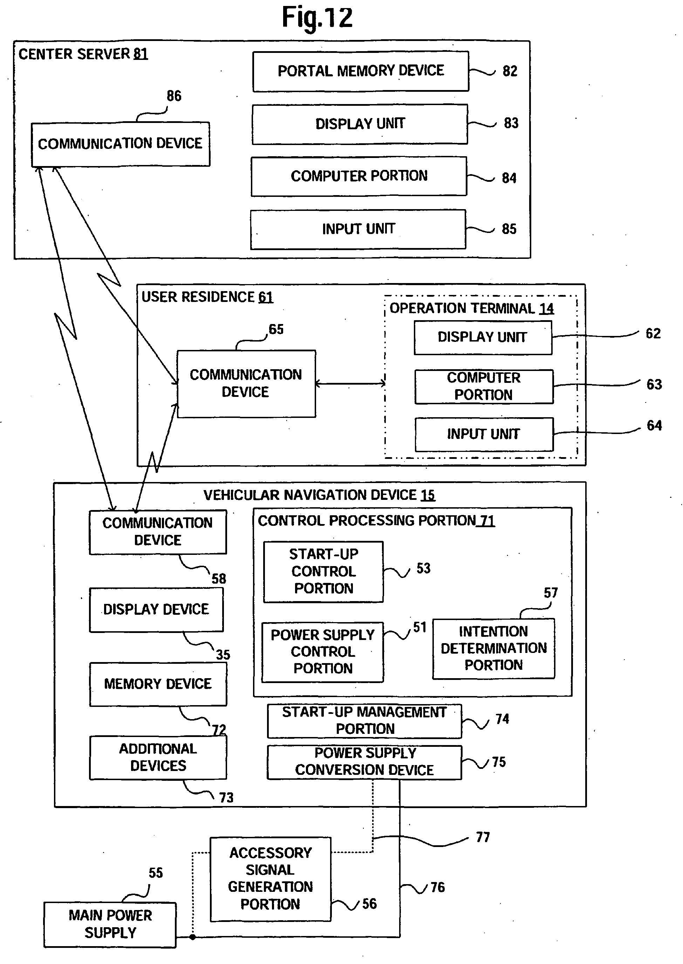

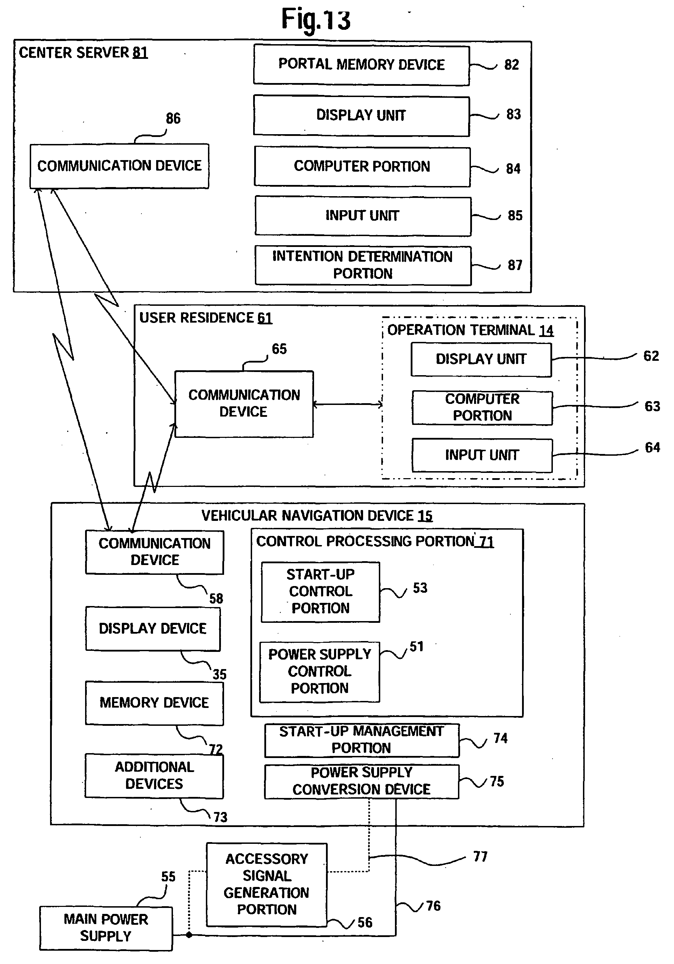

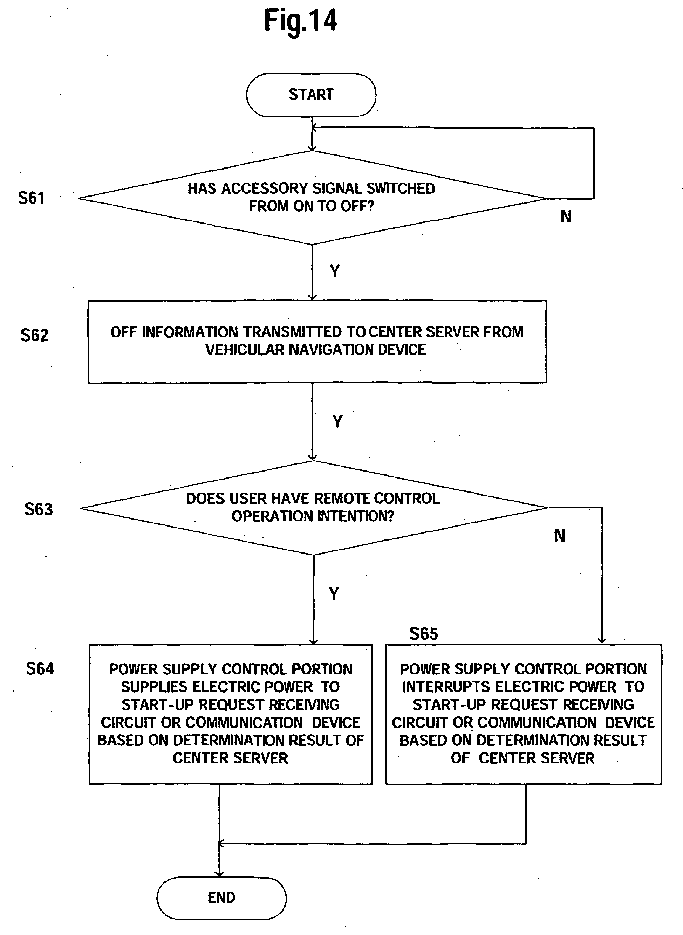

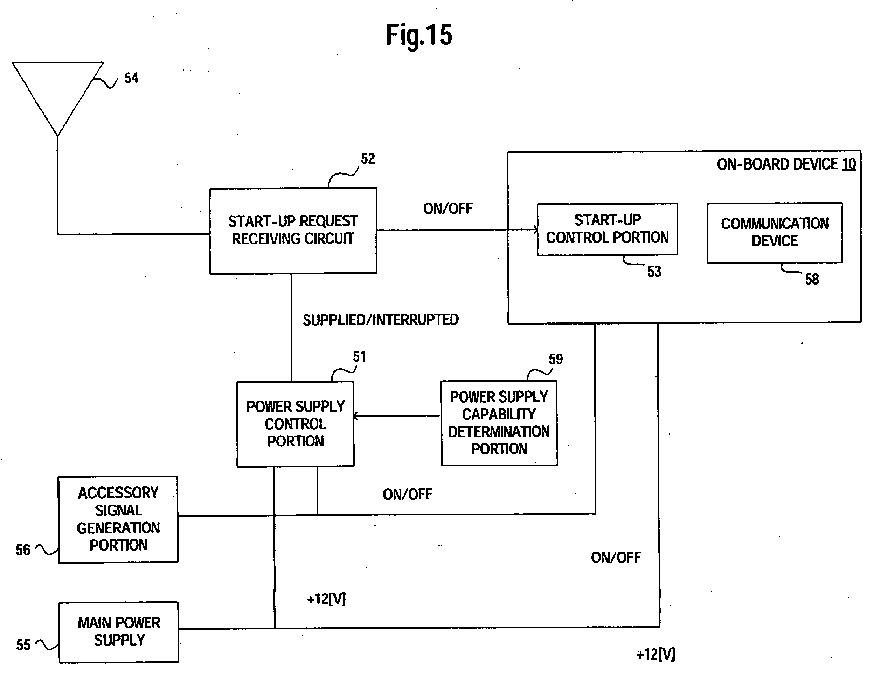

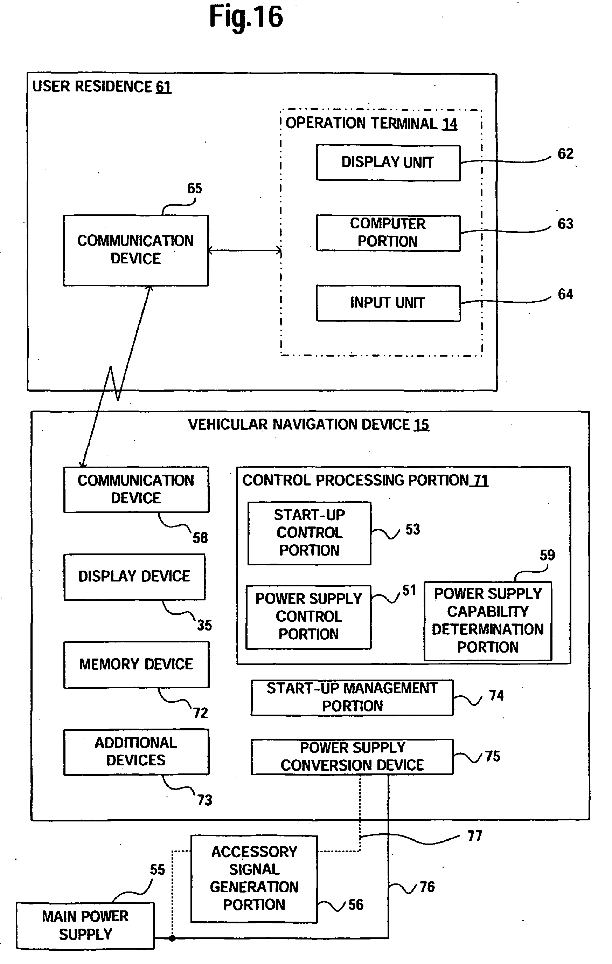

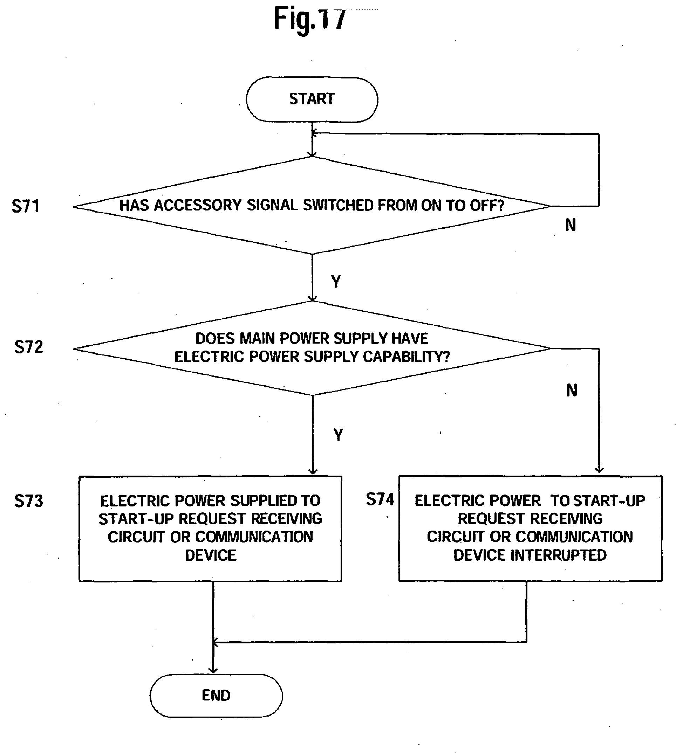

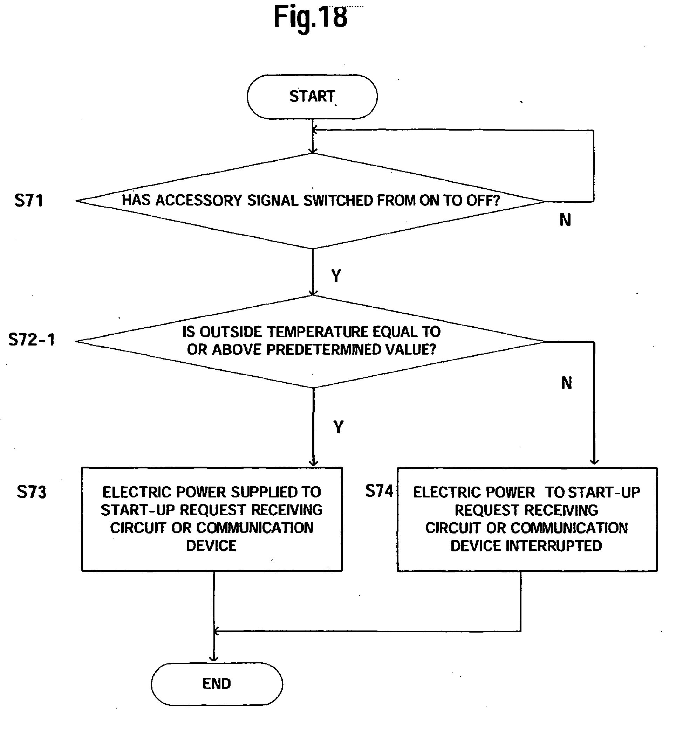

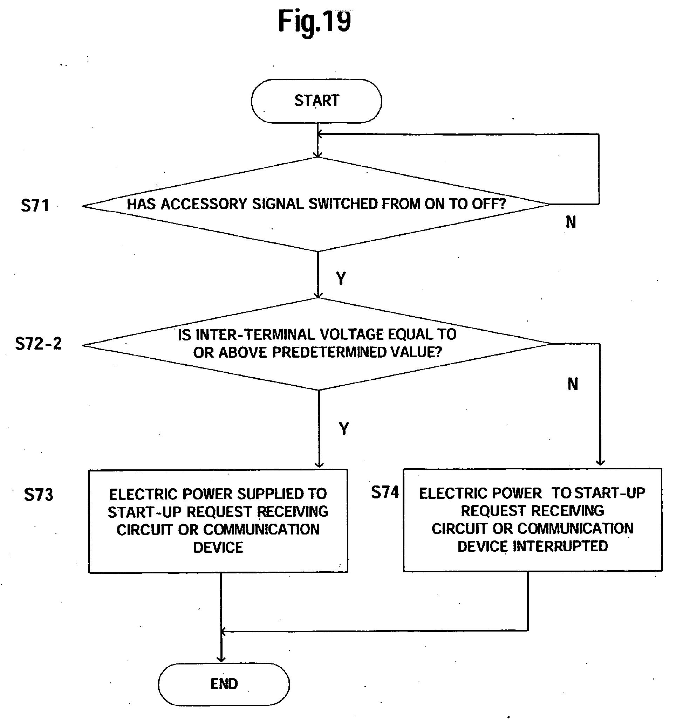

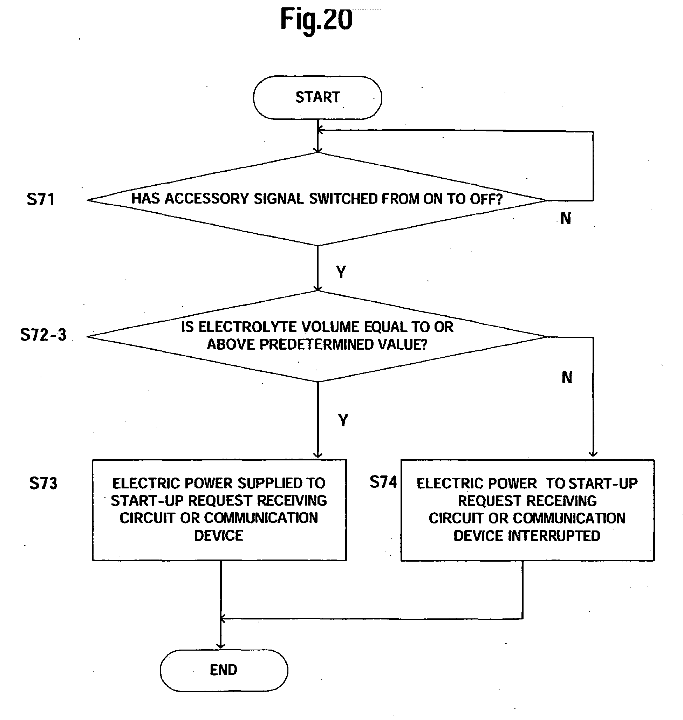

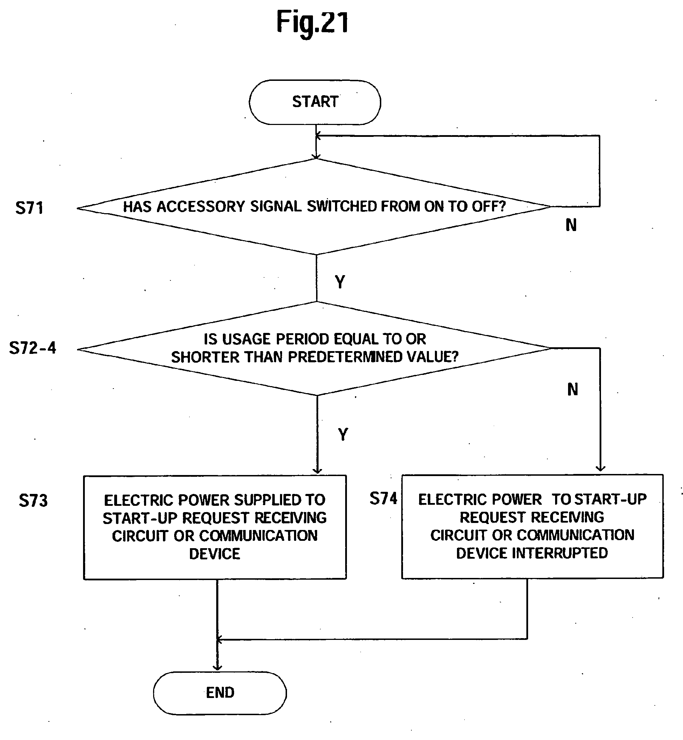

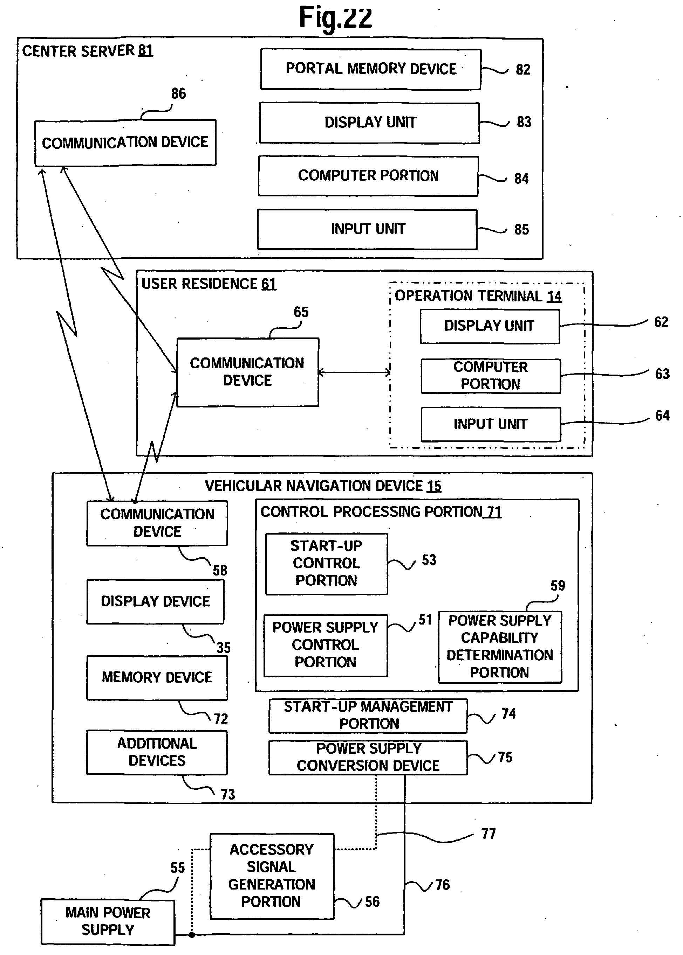

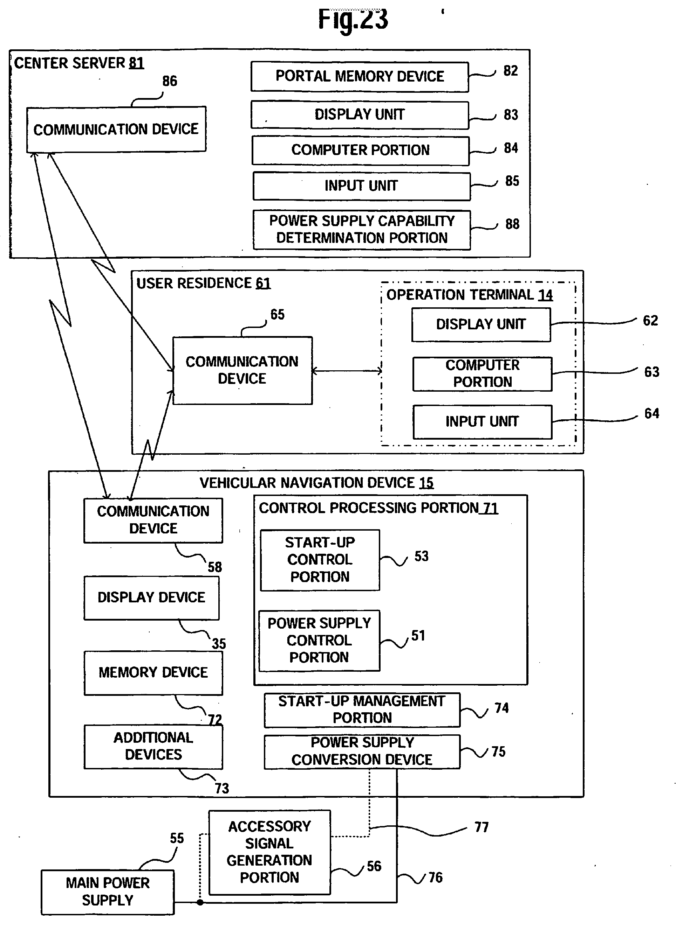

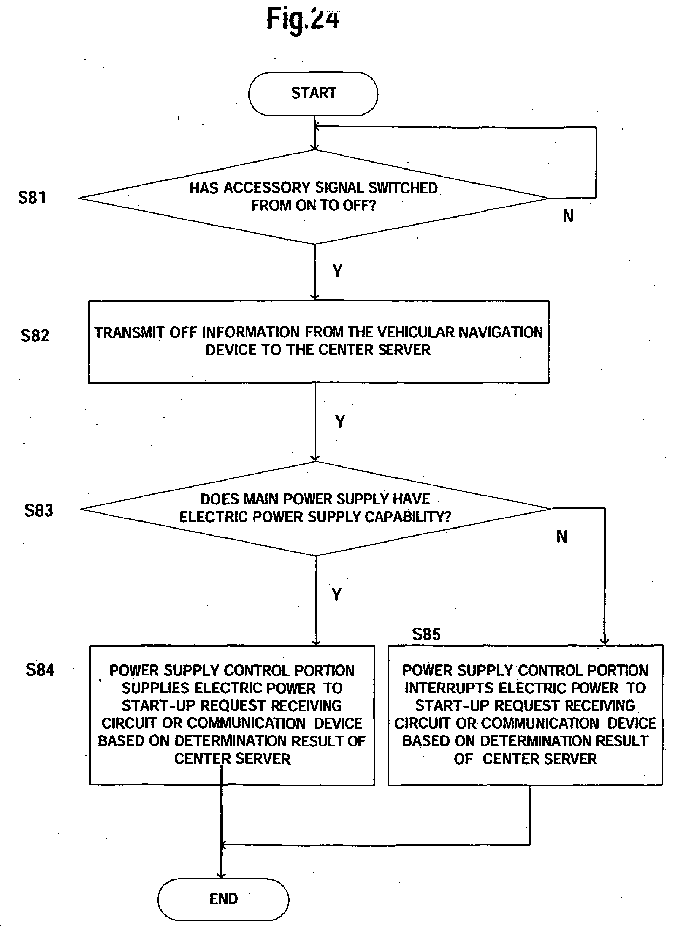

FIG. 1 shows a configuration of a power supply management system for an on-board device of a first embodiment of the invention; FIG. 2 shows a configuration of a communication system for the on-board device and an external device of the first embodiment of the invention; FIG. 3 shows a configuration of the first embodiment of the invention when the on-board device is a vehicular navigation device; FIG. 4 shows a configuration of the power supply management system for an on-board device of the first embodiment of the invention when the on-board device is the vehicular navigation device; FIG. 5 is a flow chart showing an operation of the power supply management system for an on-board device of the first embodiment of the invention; FIG. 6 is a flow chart showing an operation of the power supply management system for an on-board device of the first embodiment of the invention when a condition set by a user is a position; FIG. 7 is a flow chart showing an operation of the power supply management system for an on-board device of the first embodiment of the invention when the condition set by the user is a time/date; FIG. 8 is a flow chart showing an operation of a power supply control portion of the first embodiment of the invention when the condition set by the user is a position and a time/date; FIG. 9 is a flow chart showing an operation of the first embodiment of the invention from when the on-board device is started up to when it is stopped; FIG. 10 is a flow chart showing an operation of the first embodiment of the invention when on-board device start-up processing is executed by specified low-power wireless, and when data transmission processing is executed by wireless LAN; FIG. 11 is a flow chart showing an operation of the first embodiment of the invention when the on-board device start-up processing is executed by wireless LAN, and the data transmission processing is executed by wireless LAN; FIG. 12 shows a configuration of a power supply management system for an on-board device of a second embodiment of the invention; FIG. 13 shows a configuration of a power supply management system for an on-board device of a third embodiment of the invention; FIG. 14 is a flow chart showing an operation of the power supply management system for an on-board device of the third embodiment of the invention; FIG. 15 shows a configuration of a power supply management system for an on-board device of a fourth embodiment of the invention; FIG. 16 shows a configuration of the power supply management system for an on-board device of the fourth embodiment of the invention when the on-board device is a vehicular navigation device; FIG. 17 is a flow chart showing an operation of the power supply management system for an on-board device of the fourth embodiment of the invention; FIG. 18 is a flow chart showing an operation of the power supply management system for an on-board device of the fourth embodiment of the invention when an environmental condition is an outside temperature; FIG. 19 is a flow chart showing an operation of the power supply management system for an on-board device of the fourth embodiment of the invention when information indicating electric power supply capability is an inter-terminal voltage of a power supply; FIG. 20 is a flow chart showing an operation of a power supply control portion of the fourth embodiment of the invention when the information indicating electric power supply capability is an electrolyte volume of the power supply; FIG. 21 is a flow chart showing an operation of the power supply control portion of the fourth embodiment of the invention when the information indicating electric power supply capability is a usage period of the power supply; FIG. 22 shows a configuration of a power supply management system for an on-board device of a fifth embodiment of the invention; FIG. 23 shows a configuration of a power supply management system for an on-board device of a sixth embodiment of the invention; and FIG. 24 is flow chart showing an operation of the power supply management system for an on-board device of the sixth embodiment.

### DETAILED DESCRIPTION OF THE EMBODIMENTS

Hereinafter, embodiments of the present invention will be described in detail with reference to the drawings.

FIG. 2 shows a configuration of a communication system for an on-board device and an external device of a first embodiment of the invention.

In the figure, reference numeral 11 is a vehicle such as an automobile, a truck, a bus or a motorbike, and reference numeral 10 is an on-board device which is mounted in the vehicle 11 and which is a type of computer provided with a calculation unit such as a CPU or MPU; a storage unit such as a semi-conductor memory or a magnetic disk; a display unit such as a CRT, a liquid crystal display, or an LED (Light Emitting Diode) display; an input unit such as a keyboard, a joy-stick, a touch panel, a push button, a rotating dial or a remote controller; an input-output interface, and the like. Note that the on-board device 10 may use any form of storage medium as the storage unit, such as a magnetic tape, a magnetic disk, a magnetic drum, a CD-ROM, a CD-R/W, an MD, a DVD-ROM, a DVD-R/W, a DVD-RAM, an optical disk, an MO, an IC card, an optical card, a memory card, or a memory stick. In this case, the on-board device 10 is a vehicular navigation device, an on-board computer, a vehicular audio device, a vehicular video replay device, an engine starter device, or a theft prevention security device, or the like; however, it may be another type of device. In this example, an explanation will be given for the case when the on-board device 10 is a vehicular navigation device. In addition, in actuality, the on-board device 10 may be a plurality of devices. However, in FIG. 2, for the sake of explanatory convenience, the on-board device 10 is taken as a representative example for a plurality of devices.

Further, reference numeral 12 is an external device which is provided outside of the vehicle 11 and which acts as a relay apparatus between a network 13 and the on-board device 10; it functions as an access point to the network 13 from the on-board device 10. Here, the external device 12 is, for example, a wireless LAN adapter which communicates with the on-board device 10 using 2.4 (GHz) ISM band, 5.2 (GHz) band, or 19 (GHz) band sub-millimeter-waves, infrared rays, or the like. The wireless LAN system in this case is, for example, IEEE808.11a, IEEE808.11b, IEEE808.11e adopted as a wireless LAN system, or Bluetooth, or the like, adopted as a home wireless system. However, any type of wireless system may be adopted. For example, a transmission method like DSRC in an ETC system may be utilized. Note that, the external device 12 may be a server for a relay station that is a type of computer provided with a calculation unit such as a CPU or MPU; a storage unit such as a semi-conductor memory or a magnetic disk; a display unit such as a CRT, a liquid crystal display, or an LED display; an input unit such as a keyboard or a remote controller; an input-output interface, and the like.

In this case, the external device 12 is located close to a parking space of the vehicle 11 such that communication is executed with the on-board device 10 of the vehicle 11 that is parked in the parking space. For example, it is preferable if: in the case that the vehicle 11 is parked in a parking space at the driver's home or a parking space near to the driver's home, the external device 12 is located within the driver's home; in the case that the vehicle 11 is parked in a pay parking lot, the external device 12 is located within the pay parking lot; and, in the case that the vehicle 11 is parked in a parking space on a road, the external device 12 is located in a parking meter, or the like.

Moreover, the network 13 is a backbone network of the external device 12, and may be any type of network such as a wired or wireless public network, a dedicate line network, the Internet, an intranet, LAN, and WAN (Wide Area Network). Further, it may be a plurality of types of communication networks that are suitably combined. Moreover, it is preferable if an information supply device like a web server, which supplies various types of data such as map data, music data, image data, and character data, can be accessed via the network 13. In this case, it is preferable if the network 13 is capable of high capacity, high speed communication. For example, in the case that the network 13 is the Internet, broad band that is capable of high speed communication at a number of Mbps (Mega bit per second) or more is adopted. However, another communication system may be utilized.

Further, reference numeral 14 is an operation terminal which is operated by an operator such as a driver, a passenger, or an owner, in other words, a user, and which is a type of computer that is provided with a calculation unit such as a CPU or MPU; a storage unit such as a semi-conductor memory or a magnetic disk; a display unit such as a CRT, a liquid crystal display, or an LED display; an input unit such as a keyboard, a joy-stick, a touch panel, a tablet, a push button, a rotating dial or a remote controller; an input-output interface, and the like. Further, the operation terminal 14 may be, for example, any type of device such as a personal computer, a mobile phone device, a PHS (Personal Handy-Phone System) device, a stationary telephone device, a PDA (Personal Digital Assistant), an electronic hand-held organizer, a mobile information terminal, a game machine, a digital television, or the like. Moreover, the operation terminal 14 is connected to the external device 12, and can communicate with the on-board device 10 via the external device 12. Note that the operation terminal 14 may be capable of direct connection to the external device 12 by wire or wirelessly, and may be connectable via the network 13.

With this embodiment, while the vehicle 11 is parked at a predetermined parking space, the on-board device 10 is connected to the operation terminal 14 and the network 13 via the external device 12, and is capable of communication with a web server, not shown. For example, a scenario can be envisaged in which the on-board device 10 is a vehicular navigation device; the operation terminal 14 is a personal computer provided at the home of the driver who is the user; the external device 12 is provided within the driver's home; and the vehicle 11 is parked in a parking space at the user's home or in a parking space near their home. In this case, the user can operate the personal computer as the operation terminal 14, and execute remote control operation of the on-board device 10. For example, the user can operate the operation terminal 14 so as to set a target destination, search conditions, and the like, and transmit them to the on-board device 10. As a result, the on-board device 10, which is the vehicular navigation device that has received the target designation, search conditions, and the like, is able to automatically search for the route to the target destination, complete this search and start route guidance by the time the user gets in to the vehicle 11 and starts driving. Further, information concerning the route that is received from the on-board device 10 can be displayed on the operation terminal 14. In addition, when the network 13 is connected to a web server that provides the latest version of map data, the user can operate the operation terminal 14 so as to execute remote control operation of the on-board device 10. Accordingly, desired map data can be downloaded from the web server, transmitted to the on-board device 10, and used for updating the version of the map data stored in the on-board device 10. Note that the map data may be directly downloaded from the web server to the on-board device 10.

Moreover, in the case that the on-board device 10 is an on-board computer, the user can execute remote control operation of the on-board device 10 so as to execute communication of data between the operation terminal 14 and the on-board device 10, or run an application program on the on-board device 10. Note that desired data may be downloaded to the on-board device 10 from the web server.

In addition, in the case that the on-board device 10 is a vehicular audio device, the user can operate the operation terminal 14 to edit music, transmit it to the on-board device 10 using remote control operation thereof, and then store it in the on-board device 10. Further, in the case that a web server that provides music is connected to the network 13, the user can operate the operation terminal 14 to download desired music from the web server, and then transmit it to the on-board device 10 where it is stored. Note that, music may be directly downloaded to the on-board device 10 from the web server. Moreover, in the case that the on-board device 10 is a vehicular video replay device, video data of films or the like can be stored in the on-board device 10 in the same manner as music.

Moreover, in the case that the on-board device 10 is an engine starter device, the user can operate the operation terminal 14 so as to operate the on-board device 10 by remote control operation thereof, whereby it is possible to start the engine of the vehicle 11. As a result, by the time the user gets in to the vehicle 11 and starts driving, warm-up of the engine of the vehicle 11 is completed, whereby it is possible to immediately start running. Note that if, combined with this, a vehicle heating device or air-conditioning device is started, a passenger compartment of the vehicle 11 can be placed in a pleasantly warm state by the time the user gets in to the vehicle 11 and starts driving. Accordingly, the user does not feel any sense of discomfort.

Moreover, in the case that the on-board device 10 is a theft prevention security device, the user can operate the operation terminal 14 to execute remote control operation of the on-board device 10 so as to cause the on-board device 10 to operate or stop. As a result, if the on-board device 10 is turned to OFF immediately prior to when the user gets in to the vehicle 11, there is no need for the troublesome task of canceling security to be executed when getting in to the vehicle 11. Further, when the on-board device 10 is operating, setting can be executed such that in the case that the vehicle is subject to some sort of act (for example, acts like breaking in to a door or breaking window glass), the on-board device 10 transmits a warning to the operation terminal 14. By doing so, the user in their home can be made immediately aware that the vehicle 11 has been subjected to some sort of act. Note that in the case that a web server of a security protection company, or the like, is connected to the network 13, the on-board device 10 may transmit the warning to the web server of the security protection company, or the like, via the network 13.

Moreover, a scenario can be envisaged in which: the operation terminal 14 is a mobile phone device or a PHS phone device that is carried by the user; the external device 12 is disposed in a pay parking lot at a trip destination (for example, a pay parking lot at a department store or a theme park), and is connected to a computer that manages the pay parking lot; and the vehicle 11 is parked in this pay parking lot. In this case, in a similar manner to when the vehicle 11 is parked in the parking space at the user's home or nearby to the user's home as previously described, it is possible for remote control operation of the on-board device 10 to be executed so as to cause the on-board device 10 to download map data, music, video data, or the like, or to cause operation of the on-board device 10 to stop. Further, data, managed by the computer, related to the parking time and parking fee of the vehicle 11 may be transmitted to the on-board device 10 from the external device 12.

In addition, it is possible for remote control operation of the on-board device 10 to be executed by the user so as to transmit data from the on-board device 10 to the mobile phone device or the PHS phone device acting as the operation terminal 14, via the external device 12. Accordingly, even in the case that the user is at a location away from the vehicle 11, it is possible for them to ascertain the parking time and the parking fee of the vehicle 11 in real time.

Moreover, in the case that the computer managing the pay parking lot provides information about various facilities like department stores and theme parks in the vicinity of the pay parking area (for example, data related to internal maps of the facilities, special offers, prize offers, opening times, special events, and the like), the data related to the various facilities is transmitted to the operation terminal 14 from the on-board device 10 via the external device 12. Accordingly, it is possible for the user to obtain data related to the various facilities in the vicinity of the pay parking lot in real time.

In addition, a scenario can be envisaged in which: the operation terminal 14 is a mobile phone device or a PHS phone device that is owned by the user; the external device 12 is disposed in a parking meter and connected to a computer that manages the parking meter; and the vehicle 11 is parked in a parking space on a road. In this case, in a similar manner to when the vehicle 11 is parked in the parking space at the user's home or nearby to the user's home as previously described, it is possible for remote control operation of the on-board device 10 to be executed so as to cause the on-board device 10 to download map data, music, video data, or the like, or to cause operation of the on-board device 10 to stop. Further, data, managed by the computer, related to the parking time and parking fee of the vehicle 11 may be transmitted to the on-board device 10 from the external device 12.

In addition, it is possible to transmit data from the on-board device 10 to the mobile phone device or the PHS phone device acting as the operation terminal 14, via the external device 12. Accordingly, even in the case that the user is at a location away from the vehicle 11, it is possible for them to ascertain the parking time and the parking fee of the vehicle 11 in real time.

Moreover, in the case that the computer managing the parking meter and the on-board device 10 are provided with an electronic money payment function, an electronic credit payment function, or the like, it is possible for the user to operate the operation terminal 14 so as to execute remote control operation of the on-board device 10 and transmit a request to the on-board device 10 to execute additional parking fee payment. Accordingly, the on-board device 10 executes the payment of the additional parking fee by communicating with the computer managing the parking meter and conducting electronic money payment or electronic credit payment. Thus, it is possible for the user to pay additional parking fees even if they are at a location away from the vehicle 11.

Next, a configuration of a power supply management system for an on-board device of this embodiment of the invention will be explained.

FIG. 1 shows the configuration of the power supply management system for an on-board device of the first embodiment of the invention; FIG. 3 shows a configuration of the first embodiment of the invention when the on-board device is a vehicular navigation device; and FIG. 4 shows a configuration of the power supply management system for an on-board device of the first embodiment of the invention when the on-board device is the vehicular navigation device.

FIG. 1, which illustrates the configuration of the power supply management system for an on-board device, shows a power supply control portion 51; a start-up request receiving circuit 52 that acts as a start-up request receiving portion; a start-up control portion 53; an antenna 54; a main power supply 55; an accessory signal generation portion 56; an intention determination portion 57; and a communication device 58.

Note that, when the intention determination portion 57 executes determination as to whether a remote control operation intention of the user exists or not and determines that the remote control operation intention of the user exists, the power supply control portion 51 permits supply of electric power to the start-up request receiving circuit 52 from the main power supply 55, based on the determination of the intention determination portion 57. In other words, in the case that the intention determination portion 57 determines that there is a remote control operation intention by determining whether the remote control operation intention exits based on settings of the user, the power supply control portion 51 supplies electric power to the start-up request receiving circuit 52. In the case that the intention determination portion 57 determines that the remote control operation intention does not exist, electric power supply to the start-up request receiving circuit 52 is interrupted. Note that an operation of the intention determination portion 57 will be described hereinafter.

Moreover, the start-up request receiving circuit 52 is a circuit for receiving a start-up request that is received via the antenna 54, and is driven by electric power supplied via the power supply control portion 51. Further, the start-up request is transmitted from the operation terminal 14 via the external device 12, and is a request for causing start-up of the on-board device. In addition, the start-up request receiving circuit 52 is configured such that, when a start-up request is received when operation thereof is being executed due to supply of electric power, an ON signal is output; and when a start-up request is received when operation thereof is stopped due to interruption of electric power, an OFF signal is output instead of the ON signal.

The start-up control portion 53 controls start-up of, at the least, a portion of the on-board device 10. In other words, the start-up control portion 53 controls the supply of electric power to the on-board device 10 from the main power supply 55 in accordance with an ON signal from the accessory signal generation portion 56. Note that the accessory signal generation portion 56 is, generally, formed integrally with an engine switch of the vehicle 11 such that an ON and OFF operation thereof is executed by the user with an ignition key of the vehicle 11. In addition, when the ON operation of the accessory signal generation portion 56 is executed by the user, the ON signal is output; and when the OFF operation thereof is executed, output of the ON signal is cancelled and switching to OFF takes place.

Accordingly, when the start-up control portion 53 receives the ON signal from the accessory signal generation portion 56, it supplies electric power with the on-board device 10, and when output of the ON signal is cancelled and switching to OFF takes place, the start-up control portion 53 interrupts electric power supplied to the on-board device 10. Note that the configuration is such that, even if the start-up control portion 53 has not received the ON signal from the accessory signal generation portion 56, when an ON signal is received from the start-up request receiving circuit 52, electric power is supplied to, at the least, a portion of the on-board device 10; and when the output of the ON signal is cancelled and switching to OFF takes place, electric power to the on-board device 10 is interrupted.

The main power supply 55 is generally a vehicle battery. However, it may be a condenser (a capacitor) such as an electric double layer capacitor. Note that a reference value of an open terminal voltage for an inter-terminal voltage of the main power supply 55 may be set to any value. In this embodiment of the invention, an explanation will be given for the case of a vehicle battery for a compact passenger vehicle which is generally 12 (V). Further, when an engine, not shown, of the vehicle 11 is operating, an alternator attached to the engine supplies electric power for recharging to the main power supply 55; and when the engine is stopped, supply of electric power to the main power supply 55 is stopped and recharging does not take place. In addition, when the accessory signal generation portion 56 is OFF, the engine is stopped, whereby supply of electric power from the alternator to the main power supply 55 does not take place and recharging is not executed.

Further, the intention determination portion 57 determines whether or not the remote control operation intention exists based on a condition that is pre-set by the user. In this example, the condition is related to a position, or related to a time/date.

Here, the position is the location of a parking space where the user parks the vehicle 11, and a predetermined area including the location are registered in advance as a registered position area. For example, in the case that the external device 12 is located at the driver's home and the vehicle 11 is parked in a parking space at the user's home or nearby to the user's home, this parking space is the registered position, and a predetermined area including this registered position is registered as the registered position area. Here, in the case that communication between the on-board vehicle 10 and the external device 12 is executed using a wireless system such as a normal wireless LAN, the potential communication area is an area with a radius of 10 to 100 (m) around the external device 12. Accordingly, it is preferable that this area is registered as the registered position area. Further, the intention determination portion 57 is configured such that: when a present position of the vehicle 11 is within the registered position area, it is determined that the user has the remote control operation intention to execute remote control operation of the on-board device 10 by operating the operation terminal 14; and when the present position of the vehicle 11 is outside of the registered position area, it is determined that the user does not have the remote control operation intention.

In addition, in the case that the operation terminal 14 is a mobile phone device or a PHS phone device that is carried by the user, the external device 12 is located in a paying parking lot at a trip destination, and the vehicle 11 is parked in this parking lot, it is preferable that a predetermined area including the paying parking lot is registered as the registered position area. Further, in the case that the external device 12 is located in a parking meter and the vehicle 11 is parked in a parking space on a road, a predetermined area including the parking space is registered as the registered position area.

Note that it is possible to both appropriately change the registered position area, and to register a plurality of registered position areas in advance. For example, the area including the parking space at the user's home or nearby their home can be registered as the normal registered position area in advance, and when parking in a parking space on a road, it is possible to register a predetermined area including the parking space in question as the registered position area. When, leaving this parking space, it is possible to cancel registration of the registered position area in question.

Further, in the case that the time/date mentioned above is a time/date when the user executes remote control operation of the on-board device 10 using the operation terminal 14, it is possible to execute setting in accordance with a timetable or schedule of the user. In this case, the user registers the time/date in the on-board device 10 by operating the on-board device 10 or executing transmission from the operation terminal 14. Note that, those days on which there is a high probability of executing remote control operation by operating the operation terminal 14 (for example, the days-off at the end of each week, or the night before each day-off) can be incorporated in advance in a schedule for the time/date. Further, for example, it is possible to set a time period when there is a high probability of executing remote control operation by operating the operation terminal 14 (for example, in the evening), and incorporate this in the schedule in advance. Setting of the time/data like this can easily be executed using, for example, software that manages personal information like PIM (Personal Information Management) for managing timetables and schedules.

Note that, for the time/date, a default (initial setting) may be pre-registered in the on-board device 10 that reflects the usual intentions of the user. For example, in the case that the on-board device 10 is a vehicular navigation device, it can be anticipated that, in preparation for day-off driving, execution of remote control operation of the on-board device 10 for searching in-advance for routes for target destinations will be common. Given this, the evenings before Saturday and Sunday on each weekend, namely, from 6 to 10 pm on Friday and Saturday nights, can be predicted to be time/dates when there is a high probability of remote control operation of the on-board device 10 being executed. Accordingly, they can be pre-registered in the on-board device 10. Thus, in the case that the user is a normal income-earning employee, even if the time/date is not set by the user him/herself, the intentions of the user can be reflected.

It goes without saying that the time/day registered as the default can be changed as appropriate by the user. For example, in the case that the user's days-off are not on the weekend, but on Wednesday and Thursday instead, it is possible to set and register the nights before these days. Moreover, it is possible to appropriately set time periods as well. For example, a mid-night time period can be set and registered. Further, it is possible to set the time/data in correspondence with a special schedule instead of setting a fixed time/date such as the nights before the days-off each week. For example, a user who plans to take a long distance road-trip during the summer vacation can set and register the day/time prior to departure on the long distance road-trip.

The communication device 58 is a device for executing communication with the external device 12, and is, for example, a wireless LAN card, or the like. Note that the communication device 58 functions as a data signal receiving portion, and is configured such that when a data signal is received from outside of the on-board device 10, for example, from the external device 12, the start-up control portion 53 is controlled so as to start up, at the least, a portion of the on-board device 10.

FIG. 3 shows the configuration when the on-board device 10 is a vehicular navigation device. In FIG. 3, reference numeral 15 denotes a vehicular navigation device that is a type of computer. Further, the vehicular navigation device 15, as shown in FIG. 3, has a vehicle position information output portion 18 that outputs vehicle position information by detecting a present position; a data recording portion 16 which records road data, and the like, and which acts as a recording medium; a navigation processing portion 17 that executes various types of calculation processing such as navigation processing, based on input information; an input device 34; a display device 35; an audio input device 36; an audio output portion 37 and a communication device 38. A vehicle speed sensor 41 is connected to the navigation processing portion 17.

Further, the vehicle position information output portion 18 is configured from a GPS (Global Positioning System) sensor 21; a geomagnetic sensor 22; a distance sensor 23; a steering sensor 24; a beacon sensor 25; a gyro sensor 26; and an altimeter, not shown, and so on. Note that it is possible to omit, as appropriate, some of the GPS sensor 21, the geomagnetic sensor 22, the distance sensor 23, the steering sensor 24, the beacon sensor 25, the gyro sensor 26, the altimeter, and the like, if this is required bearing in mind production cost, and the like.

Moreover, the GPS sensor 21 detects the present position on the earth based on reception of a radio wave generated by a man-made satellite; the geomagnetic sensor 22 detects the directional orientation of the vehicle 11 based on measurement of geomagnetism; and the distance sensor 23 detects a distance, etc., from a given position on the road. For the distance sensor 23, for example, it is possible to use a device that estimates a revolution number of the vehicle wheels and detects the distance based on this revolution number; or a device that estimates an acceleration rate and detects the distance by performing double integration of this acceleration rate.

The steering sensor 24 detects a steering angle. For the steering sensor 24, for example, it is possible to use an optical rotation sensor or a rotating resistance sensor attached to a rotating portion of a steering wheel, not shown; or an angle sensor attached to the wheels.

The beacon sensor 25 detects the present position based on reception of position information from beacons provided along the road. The gyro sensor 26 detects a rotational angular velocity of the vehicle 11, namely, a turning angle. For the gyro sensor 26, for example, a gas rate gyro, a vibration gyro, or the like, is used. Moreover, it is possible to detect the directional orientation of the vehicle 11 by integrating the turning angle detected by the gyro sensor 26.

Note that the GPS sensor 21 and the beacon sensor 25 can each independently detect the present position. Further, it is possible to detect the present position by combining the distance detected by the distance sensor 23, and the directional orientation detected by the geomagnetic sensor 22 and the gyro sensor 26. In addition, it is possible to detect the present position by combining the distance detected by the distance sensor 23 and the steering angle detected by the steering sensor 24.

The data recording portion 16 is provided with a data base composed of map data files, intersection data files, node data files, road data files, photograph data files, and facilities information data files in which facilities information about hotels gasoline stations, and tourist information centers in each region, and the like, is recorded. Moreover, as well as data for searching for routes, various other types of data for display on a screen of the display device 35 are recorded in the data recording portion 16, such as guidance maps for along the established route; photographs, split screen maps, and the like, that show intersections or key features along the route; distances to upcoming intersections and direction of travel at upcoming intersections; and other guidance information. Note that various types of data for outputting predetermined information using the voice output device 37 is also recorded in the data recording portion 16.

It should be noted that intersection data, node data, and road data are respectively recorded in the intersection data files, the node data files, and road data files. Road conditions are displayed on the screen using the intersection data, the node data and the road data. Further, the intersection data includes the type of the intersection, namely, whether the intersection has traffic lights, or whether the intersection does not have traffic lights. The node data includes, at the least, the positions and shapes of the roads of the map data recorded in the map data files, and is comprised of data that shows branch points of actual roads (including intersections, T-junctions, and the like), node points, and links that connect each of the node points. In addition, the node points, at the least, indicate the position of bends in the roads.

The road data includes data about the road itself, namely, road width, gradient, cant, altitude, bank, the state of the road surface, the number of road lanes, points where the number of road lanes reduces, points where the width of the road narrows, and the like. Note that, in the case of a highway or a trunk-road, lanes on opposing sides are stored respectively as separate road data, and processed as two separate roads. For example, in the case of a trunk road with two lanes or more on each side, it is processed as two separate roads and stored in the road data as respective independent roads for the upstream lane and the downstream lane. Further, with regard to corners, data is included such as curve radius, intersections, T-junctions, and corner entry points. Further, with regard to road attributes, data is included such as railway crossings, highway entry-exit ramp ways, highway toll-collection booths, downward sloping roads, upward sloping roads, and road type (national trunk road, main local road, local road, highway, etc.).

The navigation processing portion 17 is configured from a CPU 31 that executes overall control of the vehicular navigation device 15; a RAM 32 used as working memory for occasions when the CPU 31 executes various types of calculation processing; and a ROM 33 which acts as a storage medium and on which are stored: control programs, as well as various types of program for executing destination route searches, drive-guidance along the route, determination of specified areas, search for locations and facilities, and the like. Further, the navigation processing portion 17 is connected to the input device 34, the display device 35, the voice input device 36, the voice output device 37, and the communication portion 38. Route searches, drive-guidance for along the route, determination of specific areas, searches for locations, facilities, and the like, are executed. Note that some of the voice input device 36, the voice output device 37 and the communication device 38 can be omitted, as necessary, if required for reasons related to manufacturing cost, or the like.

Moreover, the storage medium which is computer-readable and on which the navigation programs are stored is not limited to being a semi-conductor memory, and may be any form of storage medium such as a magnetic tape, a magnetic disk, a magnetic drum, a CD-R/W, an MD, a DVD-RAM, an optical disk, an MO, an IC card, an optical card, or a memory card.

The data recording portion 16 and the ROM 33 are configured from a magnetic core, a semi-conductor memory, or the like, not shown. Further, the data recording portion 16 and the ROM 33 can use any type of storage medium such as a magnetic tape, a magnetic disk, a magnetic drum, a CD-R/W, an MD, a DVD-RAM, an optical disk, an MO, an IC card, an optical card, or a memory card. The storage medium may be installed in advance in the vehicular navigation device 15, and can be replaced as appropriate by the user.

According to this embodiment, various programs are stored in the ROM 33, and various types of data are stored in the date recording portion 16. However, the programs and the data can be stored in the same manner in an external storage medium. In this case, for example, a storage medium like a flash memory, or the like, not shown, is provided in the navigation processing portion 17, whereby it is possible to read the programs and the data from the external storage medium and write them on the storage medium. Accordingly, it is possible to update the programs and the data by replacing the external storage medium. In this manner, it is possible to start up the various programs stored on the storage medium and execute various types of processing based on the data. Note that, the external storage medium may be of any type, such as, for example, a magnetic tape, a magnetic disk, a magnetic drum, a CD-R/W, an MD, a DVD-RAM, an optical disk, an MO, an IC card, an optical card, or a memory card.

The communication device 38 executes communication with the network 13 and the operation terminal 14 via the external device 12; moreover, for example, it is possible for various types of data to be received, such as: road information about congestion, and the like, received from an information sensor, or the like, not shown; traffic accident information; and D-GPS information that detects a detection difference of the GPS sensor 21. According to this embodiment, when, at the least, a part of the programs and data transmitted from the web server which is connected to the network 13 and which provides latest-version map data and programs is received, the CPU 31 can execute downloading to a readable/writeable memory, such as a storage medium which may be the RAM 32, a flash memory, a hard disk, or the like, and then start up the programs and execute various types of processing based on the data.

Further, it is possible to use the operation terminal 14 to download programs, data, and the like, transmitted from the web server to a storage medium such as a memory card or a CD-R that can be removed from a personal computer, and then start-up the programs and execute various types of processing based on this data.

The input device 34 is used to correct the vehicle position when running starts, input the target destination, and the like, and is configured from an operation key, a push button, a jog dial, a cross-shaped switch-key, or the like, that is provided on a body of the vehicular navigation device 15. However, it may also be a remote controller. Further, it is preferable that it is configured from an operation switch like an operation key or an operation menu that is displayed on the screen of the display device 35 in the case that the display device 35 has a touch panel. In this case, in the same manner as a normal touch panel, it is possible to execute input by pushing (touching) the operation switch.

Further, operation guidance, an operation menu, guidance about the operation key, the route from the present position to the target destination, guidance information along the route, and the like, are displayed on the screen of the display device 35. For the display device 35, it is possible to use a CRT display, a liquid crystal display, an LED display, a plasma display, a hologram device which projects a hologram on to a windshield, or the like.

The voice input device 36 is configured from a microphone, or the like, not shown, and makes it possible to input necessary information by voice. Further, the voice output device 37 is provided with a voice synthesis device and a speaker, not shown, and provides the user with audio information by using the speaker to output, for example, guidance information and speed shift information, which is generated by a voice that is synthesized by the voice synthesis device. Note that, as well as the voice synthesized by the voice synthesis device, the speaker may be used to output various types of sounds, and various types of guidance information that are prerecorded on a tape, a memory, or the like.

Note that FIG. 4 shows the configuration of the power supply management system for an on-board device when the on-board device 10 is the vehicular navigation device 15. In this example, the vehicle 11 is parked in a parking space at a user residence 61, which is taken to be the user's home. Further, the operation terminal 14 used by the user is provided with a display unit 62 such as a CRT, a liquid crystal display, or an LED display; a computer portion 63 which includes a calculation unit such as a CPU or MPU and a storage unit such as a semi-conductor memory or a magnetic disk, and which executes computer processing; and an input unit 64 such as a keyboard, a joy-stick, a touch panel, a tablet, a push button, a rotating dial or a remote controller. In addition, in the case that the input unit 64 is a touch panel or a tablet, it is configured integrally with the display unit 62.

The communication device 65, which includes the external device 12 connected to the operation terminal 14 via the network 13 (FIG. 2), is disposed in the user residence 61 and wirelessly executes communication with the communication device 58 of the vehicular navigation device 15. Note that a communication-capable area of the communication device 65 is an area of with a radius of around 10 to 100 (m), and this area is set to be the registered position area.

Further, for the purposes of a power supply management function, the vehicular navigation device 15 is provided with, as shown in FIG. 4, a control processing portion 71, a start-up management portion 74, a power supply conversion device 75, a communication device 58, a display device 35, a memory device 72, and additional devices 73. First, the control processing portion 71 has an integrated control processing function for the operation of the vehicular navigation device 15, and is provided with the power supply control portion 51, the start-up control portion 53 and the intention determination portion 57. Further, the start-up management portion 74 executes management related to which portions of the vehicular navigation device 15 need to be provided with electric power, and supplies electric power to devices that need to be started up, and interrupts supply of electric power to devices to be stopped. Note that, electric power supplied from the main power supply 55, such as the vehicle battery, has its voltage, or the like, converted by the power supply conversion device 75, and following this is supplied to the device that needs to started up. In this case, electric power supplied from the main power supply 55 is always supplied to the power supply conversion device 75 via a power supply line 76, and is also supplied, while subject to ON-OFF control of the accessory signal generation portion accessory signal generation portion 56, to the power supply conversion device 75 via an accessory-coupled power supply line 77.

The memory device 72 is provided with all of the storage units and recording units, including the RAM 32, the ROM 33 and the date recording portion 16, shown in FIG. 3, and is not only a semi-conductor memory, but includes any form of storage medium such as a magnetic tape, a magnetic disk, a magnetic drum, a CD-R/W, an MD, a DVD-RAM, an optical disk, an MO, an IC card, an optical card, or a memory card. Further, the additional devices 73 include the vehicle position information output portion 18, the vehicle speed sensor 41, the input device 34, the voice input device 36, the voice output device 37, the communication device 38, and the start-up request receiving circuit 52, and the like, shown in FIG. 3.

Next, an operation of the power supply management system for an on-board device with the above configuration will be described.

FIG. 5 is a flow chart showing the operation of the power supply management system for an on-board device of the first embodiment of the invention; FIG. 6 is a flow chart showing an operation of the power supply management system for an on-board device of the first embodiment of the invention when the condition set by the user is the position; FIG. 7 is a flow chart showing an operation of the power supply management system for an on-board device of the first embodiment of the invention when the condition set by the user is the time/date; and FIG. 8 is a flow chart showing an operation of the power supply control portion of the first embodiment of the invention when the condition set by the user is the position and the time/date.

Note that an explanation will be given here for a case where data is transferred to the on-board device 10 from the operation terminal 14 while the vehicle 11 is parked in the parking space at the user's home.

First, the control processing portion 71 determines whether the accessory signal of the accessory signal generation portion 56 has switched from ON to OFF. Moreover, in the case of ON, the determination is repeatedly executed. On the other hand, when it is determined that switching to OFF has been executed, the intention determination portion 57 determines whether or not the user has the remote control operation intention to execute remote control operation of the on-board device 10 by operating the operation terminal 14. Next, if the intention determination portion 57 determines that the user has the remote control operation intention, the power supply control portion 51 supplies electric power to the start-up request receiving circuit 52 or the communication device 58. On the other hand, if the intention determination portion 57 determines that the user does not have the remote control operation intention, the power supply control portion 51 interrupts supply of electric power to the start-up request receiving circuit 52 or the communication device 58.

In this case, the condition by which the intention determination portion 57 determines whether the user has the remote control operation intention is the position; accordingly, the intention determination portion 57 determines whether the present position of the vehicle 11 is within the registered position area. Note that the registered position area is the communication-capable area of the communication device 65 disposed in the user residence 61. In addition, when the present position of the vehicle 11 is within the registered position area, the intention determination portion 57 determines that the user has the remote control operation intention, and thus the power supply control portion 51 supplies electric power to the start-up request receiving circuit 52 or the communication device 58.

On the other hand, in the case that the condition by which the intention determination portion 57 determines whether the user has the remote control operation intention is the time/date, the intention determination portion 57 determines whether the present time is a predetermined time/data, based on a clock, not shown, provided in the on-board device 10. Note that the predetermined time/date is a time that is pre-set by the user, such as a determined time period on Saturday, like 8 to 10 pm. Next, when it is the predetermined time/date, the intention determination portion 57 determines that the user has the remote control operation intention, and thus the power supply control portion 51 supplies electric power to the start-up request receiving circuit 52 or the communication device 58. Further, in the case that it is not the predetermined time/date, the intention determination portion 57 determines that the user does not have the remote control operation intention, and thus the power supply control portion 51 interrupts the supply of electric power to the start-up request receiving circuit 52 or the communication device 58.

In addition, in the case that the condition by which the intention determination portion 57 determines whether the user has the remote control operation intention is the position and the time/date, the intention determination portion 57 determines whether the present position of the vehicle 11 is within the registered position area. And, in the case that it is within the registered position area, next, the intention determination portion 57 determines whether the present time is the predetermined time/data. Note that in the case that the present position of the vehicle 11 is not within the registered position area, the intention determination portion 57 determines that the user has the remote control operation intention, and thus the power supply control portion 51 interrupts the supply of electric power to the start-up request receiving circuit 52 or the communication device 58. In addition, in the case that it is determined that it is the predetermined time/date as a result of the determination as to whether the present time is the predetermined time/date, the intention determination portion 57 determines that the user has the remote control operation intention. Accordingly, the power supply control portion 51 supplies electric power to the start-up request receiving circuit 52 or the communication device 58. Further, in the case that it is not the predetermined time/date, the intention determination portion 57 determines that the user does not have the remote control operation intention, and thus the power supply control portion 51 interrupts the supply of electric power to the start-up request receiving circuit 52 or the communication device 58.

Next, an explanation will be given about the flow charts. First, an explanation will be given about the flow chart of FIG. 5.

In step S1 it is determined whether the accessory signal has switched from ON to OFF. In the case that switching to OFF has been executed, step S2 is proceeded to. In the case that switching to OFF has not been executed, waiting is executed.

In step S2, it is determined whether the user has the remote control operation intention or not. In the case they have the remote control operation intention, step S3 is proceeded to. In the case they do not have the remote control operation intention, step S4 is proceeded to.

In step S3, electric power is supplied to the start-up request receiving circuit 52 or the communication device 58.

In step S4, supply of electric power to the start-up request receiving circuit 52 or the communication device 58 is interrupted.

Next, an explanation will be given of the flow chart shown in FIG. 6 for when the condition set by the user is the position.

In step S1 it is determined whether the accessory signal has switched from ON to OFF. In the case that switching to OFF has been executed, step S2-1 is proceeded to. In the case that switching to OFF has not been executed, waiting is executed.

In step S2-1, it is determined whether the present position of the vehicle is within the registered position area. In the case that it is within the registered position area, step S3 is proceeded to. In the case it is not within the registered position area, step S4 is proceeded to.

In step S3, electric power is supplied to the start-up request receiving circuit 52 or the communication device 58.

In step S4, supply of electric power to the start-up request receiving circuit 52 or the communication device 58 is interrupted.

Next, an explanation will be given about the flow chart shown in FIG. 7 for when the condition set by the user is the time/date.

In step S1 it is determined whether the accessory signal has switched from ON to OFF. In the case that switching to OFF has been executed, step S2-2 is proceeded to. In the case that switching to OFF has not been executed, waiting is executed.

In step S2-2, it is determined whether it is the predetermined time/date. In the case that it is the predetermined time/date, step S3 is proceeded to. In the case that it is not the predetermined time/date, step S4 is proceeded to.

In step S3, electric power is supplied to the start-up request receiving circuit 52 or the communication device 58.

In step S4, supply of electric power to the start-up request receiving circuit 52 or the communication device 58 is interrupted.

Next, an explanation will be given about the flow chart of FIG. 8 for when the condition set by the user is the position and the time/date.

In step S1 it is determined whether the accessory signal has switched from ON to OFF. In the case that switching to OFF has been executed, step S2-1 is proceeded to. In the case that switching to OFF has not been executed, waiting is executed.

In step S2-1, it is determined whether the present position of the vehicle is within the registered position area. In the case that it is within the registered position area, step S2-2 is proceeded to. In the case it is not within the registered position area, step S4 is proceeded to.

In step S2-2, it is determined whether it is the predetermined time/date. In the case that it is the predetermined time/date, step S3 is proceeded to. In the case that it is not the predetermined time/date, step S4 is proceeded to.

In step S3, electric power is supplied to the start-up request receiving circuit 52 or the communication device 58.

In step S4, supply of electric power to the start-up request receiving circuit 52 or the communication device 58 is interrupted.

Next, an explanation will be given for the case when, in the power supply management system for an on-board device, the power supply control portion 51 supplies electric power to the start-up request receiving circuit 52. In this case, on-board device start-up processing is executed, then data transmission processing is executed, and following this, on-board device stop processing is executed.

FIG. 9 is a flow chart showing an operation of the first embodiment of the invention from when the on-board device is started up to when it is stopped.

In the on-board device start-up processing, first, a start-up request is transmitted to the on-board device 10 from the operation terminal 14 via the external device 12. The start-up request includes an ID that specifies the on-board device 10. In addition, the on-board device 10 transmits a reception confirmation that confirms reception of the start-up request to the operation terminal 14 via the external device 12. Note that, when the operation terminal 14 does not receive the reception confirmation after a predetermined time has elapsed following transmission of the start-up request, it transmits the start-up request repeatedly up to three times.

Next, start-up processing is executed so as to start-up the on-board device 10. Then, the on-board device 10 transmits a start-up processing completed notification that indicates the completion of start-up processing to the operation terminal 14 via the external device 12. Further, the operation terminal 14 transmits a reception confirmation that confirms reception of the start-up processing completed notification to the on-board device 10 via the on-board device 12. Note that, when the on-board device 10 does not receive the reception confirmation after a predetermined time has elapsed following transmission of the start-up completed notification, it transmits the start-up completed notification repeatedly up to three times.

Next, in the data transmission processing which is processing for data transmission, a user ID for verification of the user is transmitted to the on-board device 10 from the operation terminal 14 via the external device 12. In addition, a password is also transmitted along with the user ID. Then, the on-board device 10 transmits a reception confirmation that confirms reception of the user ID to the operation terminal 14 via the external device 12. Note that, when the operation terminal 14 does not receive the reception confirmation after a predetermined time has elapsed following transmission of the user ID, it transmits the user ID repeatedly up to three times.

Next, verification processing is executed in the on-board device 10 based on the user ID and the password. Then, the on-board device 10 transmits "verification OK", which indicates that the verification processing is completed, to the operation terminal 14 via the external device 12. Further, the operation terminal 14 transmits a reception confirmation that confirms reception of the verification OK to the on-board device 10 via the external device 12. Note that, when the on-board device 10 does not receive the reception confirmation after a predetermined time has elapsed following transmission of the verification OK, it transmits the verification OK repeatedly up to three times.

Next, a transmission start request is transmitted from the operation terminal 14 to the on-board device 10 via the external device 12. Then, the on-board device 10 transmits a reception confirmation that confirms reception of the transmission start request to the operation terminal 14 via the external device 12. Note that, when the operation terminal 14 does not receive the reception confirmation after a predetermined time has elapsed following transmission of the transmission start request, it transmits the transmission start request repeatedly up to three times. Then, data is transmitted from the operation terminal 14 to the on-board device 10 via the external device 12.

Next, when transmission of the data is completed, "transmission completed" is transmitted from the operation terminal 14 to the on-board device 10 via the external device 12. Then, the on-board device 10 transmits a reception confirmation that confirms reception of the transmission completed to the operation terminal 14 via the external device 12.

Finally, in the on-board device stop processing, a stop request is transmitted from the operation terminal 14 to the on-board device 10 via the external device 12. The stop request includes an ID that specifies the on-board device 10. Next, the on-board device 10 transmits a reception confirmation that confirms reception of the stop request to the operation terminal 14 via the external device 12. Note that, when the operation terminal 14 does not receive the reception confirmation after a predetermined time has elapsed following transmission of the stop request, it transmits the stop request repeatedly up to three times.

Then, the on-board device 10 transmits a stop completed notification to the operation terminal 14 via the external device 12. Then, the operation terminal 14 transmits a reception confirmation that confirms reception of the stop completed notification to the on-board device 10 via the external device 12. Note that, when the on-board device 10 does not receive the reception confirmation after a predetermined time has elapsed following transmission of the stop completed notification, it transmits the stop completed nonfiction repeatedly up to three times. Lastly, the on-board device stop processing is executed so as to stop the on-board device 10.

Next, an explanation will be given about the flow chart.

In step S 10, the on-board device start-up processing is executed.

In step S20, the data transmission processing is executed.

In step S30, the on-board device stop processing is executed.

Hereinafter, an explanation will be presented about an operation when the on-board device start-up processing is executed by specific low-power wireless, and when the data transmission processing is executed by wireless LAN.

FIG. 10 is a flow chart showing an operation of the first embodiment of the invention when the on-board device start-up processing is executed by specific low-power wireless, and when the data transmission processing is executed by wireless LAN.

Here, an explanation will be given for an example when: a web site is accessed and a search for a route to a target destination is executed; and, following this, data that is created in relationship to an established route is transmitted to the on-board device 10. In this example, the user operates the operation terminal 14 to access a web server, not shown, and then logs-in to a predetermined web site supported by the web server. The web site provides a service that allows a route to a target destination to be searched for by executing navigation processing. Further, the web site is provided with a user dedicated area; if the user inputs a user name, password, and the like, they are able to log-in to the area. Then, when the user inputs search conditions such as a departure location and a target destination, the route to the target destination is searched for and data for guidance along the route is created. Following this, the user downloads the created data to the operation terminal 14. With this, the data creation processing is completed.

Next, the user operates the operation terminal 14 to transmit the data to the on-board device 10. In this case, the start-up request is transmitted to the on-board device 10 from the external device 12. In addition, when the on-board device 10 receives the start-up request, the on-board device start-up processing is executed in order to perform start-up. With this, the on-board device start-up processing is completed, and a wireless LAN card that acts as the communication device 58 of the on-board device 10 transmits the user ID to the external device 12 that functions as an access point. Then, the external device 12, upon receipt of the user ID, transmits a reception confirmation to the communication device 58, and executes verification processing of the communication device 58. Following this, the external device 12 transmits "verification OK" that indicates the completion of the verification processing to the communication device 58. Then, the communication device 58 transmits a reception confirmation that confirms receipt of the verification OK to the external device 12. With this, the verification processing is completed.

Next, following transmission of the data to the on-board device 10 from the operation terminal 14 via the external device 12, the on-board device 10 stores the received data. With this, the data transmission processing is completed. Lastly in the on-board device start-up processing, a stop request is transmitted from the operation terminal 14 to the on-board device 10 via the external device 12, whereby the on-board device 10 is stopped by execution of the on-board device start-up processing.

Next, the flow chart will be explained.

In step S41, the data creation processing is executed.

In step S42, the on-board device start-up processing is executed.

In step S43, the verification processing is executed.

In step S44, the data transmission processing is executed.

In step S45, the on-board device stop processing is executed.

Next, an explanation will be given about an operation when the on-board device start-up processing is executed by wireless LAN, and when the data transmission processing is executed by wireless LAN.

FIG. 11 is a flow chart showing an operation of the first embodiment of the invention when the on-board device start-up processing is executed by wireless LAN, and when the data transmission processing is executed by wireless LAN.

Here, an explanation will be given for an example when: a web site is accessed and a search for a route to a target destination is executed; and, following this, data that is created in relationship to an established route is transmitted to the on-board device 10. In this example, the wireless LAN card that acts as the communication device 58 of the on-board device 10 transmits the user ID to the external device 12 that functions as the access point. Then, the external device 12, upon receipt of the user ID, transmits a reception confirmation to the communication device 58, and executes verification processing of the communication device 58. Following this, the external device 12 transmits "verification OK" that indicates the completion of the verification processing to the communication device 58. Then, the communication device 58 transmits a reception confirmation that confirms receipt of the verification OK to the external device 12. With this, the verification processing is completed.

Following this, the user operates the operation terminal 14 to access the web server, not shown, and then logs-in to the predetermined web site supported by the web server. The web site provides a service that allows a route to a target destination to be searched for by executing navigation processing. Further, the web site is provided with the user dedicated area; if the user inputs a user name, password, and the like, they are able to log-in to the area. Then, when the user inputs search conditions such as a departure location and a target destination, the route to the target destination is searched for and data for guidance along the route is created. Following this, the user downloads the created data to the operation terminal 14. With this, the data creation processing is completed.

Next, the user operates the operation terminal 14 so as to transmit the data to the on-board device 10. In this case, when the data is transmitted to the on-board device 10 from the operation terminal 14 via the external device 12, a predetermined portion of the on-board device 10 starts up. Then, the on-board device 10 stores the received data. With this, the data transmission processing is completed. Lastly in the on-board device start-up processing, a stop request is transmitted from the operation terminal 14 to the on-board device 10 via the external device 12, whereby the on-board device 10 is stopped by execution of the on-board device start-up processing.

Next, the flow chart will be explained.

In step S51, the verification processing is executed.

In step S52, the data creation processing is executed.

In step S53, the data transmission processing is executed.

In step S54, the on-board device stop processing is executed.

In this way, according to this embodiment, when the intention determination portion 57 determines that the user has the remote control operation intention, electric power is supplied to the start-up request receiving circuit 52 or the communication device 58. In this example, the intention determination portion 57 executes determination as to whether the remote control operation intention exists or not based upon the condition related to the position or the time/date that is pre-set by the user. In addition, in the case that the condition relates to the position, the configuration is such that the intention determination portion 57 determines that, when the present position of the vehicle 11 is within the registered position area, the user has the remote control operation intention to execute remote control operation of the on-board device 10 by operating the operation terminal 14; and determines that, when the present position of the vehicle 11 is outside of the registered position area, that the user does not have the remote control operation intention. Moreover, in the case that the condition is related to the time/date, the configuration is such that the intention determination portion 57 determines that, when it is the predetermined time/date, that the user has the remote control operation intention to execute remote control operation of the on-board device 10 by operating the operation terminal 14; and determines that, when it is not the predetermined time/date, that the user does not have the remote control operation intention.

Accordingly, when the vehicle 11 is parked within the registered position area or when it is the predetermined time/date, the start-up request receiving circuit 52 is driven by electric power supplied thereto, and when the start-up request receiving circuit 52 receives the start-up request transmitted from the external device 12, the start-up control portion 53 is controlled so as to start up, at the least, a portion of the on-board device 10. Moreover, the communication device 58 is driven by electric power supplied thereto, and when it receives the data signal transmitted from the external device 12, the start-up control portion 53 is controlled so as to start up, at the least, a portion of the on-board device 10.

Here, the portion of the on-board device 10 that is started up by the start-up control portion 53 is, for example, (in the case that the data is downloaded to the on-board device 10 and stored on a magnetic disk acting as a hard disk that is provided as the storage unit of the on-board device 10), the hard disk, the RAM acting as a semi-conductor body provided as the storage unit of the on-board device 10, and the CPU provides as the calculating unit thereof; further, for example, when the downloaded data is stored in the RAM, it is the RAM and the CPU, or the RAM alone.

In addition, the configuration is such that, when the vehicle 11 is parked outside of the registered position area or when it is not the predetermined time/date, the supply of electric power to the start-up request receiving circuit 52 and the communication device 58 is interrupted.

As a result, when the vehicle 11 is parked at a location away from the predetermined area, or when it is not the predetermined time/date, it is possible to interrupt the supply of electric power to the start-up request receiving circuit 52 and the communication device 58, whereby it is possible to inhibit discharge of the vehicle battery that acts as the main power supply 55. Further, when the vehicle 11 is parked at the predetermined area or when it is the predetermined time/date, it is possible for the user to operate the operation terminal 14, whereby it is possible for the on-board device 10 to be operated by remote control operation, data to be transmitted to the on-board device 10, and so on.

Accordingly, when the vehicle 11 is parked with the engine stopped, except for when the intention determination portion 57 determines that the user has the remote control operation intention to execute remote control operation of the on-board device 10, it is possible to interrupt the supply of electric power to the on-board device 10, whereby it is possible to reduce discharge of the vehicle battery acting as the main power supply 55.

Next, a second embodiment of the invention will be explained. Note that structural members that are the same as those of the first embodiment are denoted with the same reference numerals, and an explanation thereof is omitted. Further, an explanation of operations and effects that are the same as those of the first embodiment is also omitted.

FIG. 12 shows a configuration of a power supply management system for an on-board device of the second embodiment of the invention.

In this embodiment, reference numeral 81 denotes a center sever disposed at an information center that provides various types of information, and is connected to the communication device 65 of the user residence 61 via the network 13 (FIG. 2) of the Internet, or the like (that was explained for the first embodiment), such that communication therebetween is possible. The center server 81 that is a type of computer provided with a calculation unit such as a CPU or MPU; a storage unit such as a semi-conductor memory or a magnetic disk; a display unit such as a CRT, a liquid crystal display, or an LED display; an input unit such as a keyboard, a touch panel, a tablet, a push button, or a mouse; and an input-output interface, and the like. In addition, although the center server 81 is, for example, a web server connected to the Internet, it may be another type of device such as a personal computer, or a work station. Moreover, the center server 81 may be configured so as to be independent; may be a distributed server that organically connects a plurality of servers; or may be one system configured within a large computer.

The center server 81 distributes, via the network 13, navigation device use data used by the vehicular navigation device 15 such as map data, road data, photographic data and facilities information data including information about facilities such as hotels, gasoline stations and tourist information centers in each region; update programs for the vehicular navigation device 15; software for personal information management that can be utilized by the vehicular navigation device 15; data for the user's schedule; application programs such as software for games; software for entertainment such as music and video data; and the like. Further, the center server 81 manages user information and manages the data and programs that are distributed. For example, in the case that the data is map data, version information about the map data is managed. In the case that the data is schedule data, point information including the data itself and time/date information, and the like, is managed.

In this example, the center server 81 has a portal memory device 82 which acts as a storage unit for storing distributed data and programs; a display unit 83 that is used by an operator at the information center as a monitor; a computer portion 84 that executes computer processing; an input unit 85 that is operator operated; and a communication device 86 that communicates with the communication device 65 at the user residence 61. In this case, first, the data and programs distributed by the center server 81 are temporarily stored in the operation terminal 14. Following this, the communication device 65 at the user's residence 61 and the communication device 58 of the vehicular navigation device 15 are connected, and the data and programs are transmitted to the vehicular navigation device 15 from the operation terminal 14.

Note that the communication device 65 may also be a rooter or a home server provided with a storage unit used by a home network, or the like. In this case, the data and programs distributed by the center server 81 are temporarily stored in the storage unit of the communication device 65. When communication between the communication device 65 and the communication device 58 of the vehicular navigation device 15 is established, the data and programs are transmitted to the vehicular navigation device 15 from the communication device 65.

Moreover, direct communication between the communication device 86 of the center server 81 and the communication device 58 of the vehicular navigation device 15 may also be executed. For example, in the case that the network 13 includes a network that is capable of communication with wireless data of a mobile phone network or a PHS phone network, and the communication device is provided with a wireless data communication modem such as a mobile phone modem or a PHS phone modem, it is possible to execute direct communication between the communication device 86 of the center server 81 and the communication device 58 of the vehicular navigation device 15.

In addition, the user can operate the operation terminal 14 so as to download data to the vehicular navigation device 15. In this case, the data includes navigation device use data, update programs, application programs, game software, entertainment use software, and data about established routes, found locations, facilities, and the like.

For example, in the case that the center server 81 provides a latest version of the map data as the navigation device use data, the user operates the operation terminal 14 so as to download the desired map data from the center server 81 to the operation terminal 14 via the communication device 65. Then, the map data is transferred to the vehicular navigation device 15 via the communication device 65, whereby it is possible to update the version of the map data stored in the vehicular navigation device 15. Moreover, temporary downloading to the operation terminal 14 may be omitted, and the map data may be directly downloaded to the vehicular navigation device 15 from the center server 81.

Further, in the case that the vehicular navigation device 15 is a device capable of overwriting its drive program, the user may download an updated drive program to the vehicular navigation device 15 from the center server 81. Moreover, in the case that the vehicular navigation device 15 is provided with a vehicular audio device function, the user can edit music using the operation terminal 14, and then transfer it to the vehicular navigation device 15 where it is stored. Further, in the case that the center server 81 distributes music, the operation terminal 14 can be operated to download the desired music from the center server 81. It can then be transferred to the vehicular navigation device 15 where it is stored. Moreover, music may be directly downloaded from the center server 81 to the vehicular navigation device 15.

Further, in the case that the vehicular navigation device 15 has a static image/video image replay function, or the like, it is possible to store image data for films, and the like, in the vehicular navigation device 15, in a similar manner to music. Moreover, it is possible to upload data of static images, video images, and the like, that have been filmed by the user with a digital camera or a video camera from the operation terminal 14 or the vehicular navigation device 15 to the center server 81; then, when necessary, it is possible to execute downloading from the center server 81 to the operation terminal 14 or the vehicular navigation device 15.

In the case that the vehicular navigation device 15 has a function that organizes and displays timetables, schedules, and the like, the user can utilize the operation terminal 14 and use PIM software, or the like, to create timetables, schedules, and the like; the data thereof can then be transferred to the vehicular navigation device 15 and stored therein. Note that, the center server 81 may manage timetables, schedules, or the like.

In this manner, with this embodiment, data and programs are distributed to the vehicular navigation device 15 from the center server 81. Accordingly, it is possible for the vehicular navigation device 15 to easily utilize a large volume of data and programs. Further, it is possible to make the configuration of the vehicular navigation device 15 simple. As a result, it is possible to make the vehicular navigation device 15 compact and reduce the manufacturing cost thereof.

Next, a third embodiment of the invention will be explained. Note that structural members that are the same as those of the first and second embodiments are denoted with the same reference numerals, and an explanation thereof is omitted. Further, an explanation of operations and effects that are the same as those of the first and second embodiments is also omitted. FIG. 13 shows a configuration of a power supply management system for an on-board device of a third embodiment of the invention; and FIG. 14 is a flow chart showing an operation of the power supply management system for an on-board device of the third embodiment of the invention.

In this embodiment, the vehicular navigation device 15 does not have the intention determination portion 57, and the center server 81 is provided with an intention determination portion 87. The intention determination portion 87 has the same functions as the intention determination portion 87. Further, the power supply control portion 51 is configured such that, when the intention determination portion 87 determines that the remote control operation intention exists based on determination as to whether or not the user has the remote control operation intention, supply of electric power to the start-up request receiving circuit 52 from the main power supply 55 is permitted based upon the determination of the intention determination portion 87. Note that the configuration of other sections is the same as that of the second embodiment, and thus an explanation thereof will be omitted.

Next, the operation of the power supply management system for an on-board device of this embodiment will be explained.

First, the control processing portion 71 of the vehicular navigation device 15 determines whether the accessory signal of the accessory signal generation portion 56 has switched from ON to OFF. Moreover, in the case of ON, the determination is repeatedly executed. On the other hand, when it is determined that switching to OFF has been executed, the communication device 58 transmits "OFF information" that indicates that the accessory signal has switched to OFF from ON to the communication device 86 of the center server 81. Note that the OFF information may be transmitted to the communication device 86 of the center server 81 via the communication device 65 of the user residence 61.

Then, when the communication device 86 receives the OFF information, the intention determination portion 87 determines whether or not the user has the remote control operation intention. Next, if the intention determination portion 87 determines that the user has the remote control operation intention, the communication device 86 of the center server 81 transmits the determination result to the communication device 58 of the vehicular navigation device 15. Then, when the determination result is transmitted to the communication device 58 of the vehicular navigation device 15, the power supply control portion 51 supplies electric power to the start-up request receiving circuit 52 or the communication device 58. Note that the determination result may be transmitted to the communication device 58 of the vehicular navigation device 15 via the communication device 65 at the user residence 61.

On the other hand, if the intention determination portion 87 determines that the user does not have the remote control operation intention, the communication device 86 of the center server 81 transmits the determination result to the communication device 58 of the vehicular navigation device 15. Then, when the determination result is transmitted to the power supply control portion 51 from the communication device 58, the power supply control portion 51 supplies electric power to the start-up request receiving circuit 52 or the communication device 58. Note that the determination result may be transmitted to the communication device 58 of the vehicular navigation device 15 via the communication device 65 at the user residence 61.

In this example, the intention determination portion 87 determines whether the user has the remote control operation intention based on five determination items, namely: a position; a time/date that is pre-set by the user; a time/date that is pre-registered in the center server 81 (for example, a time/data when new programs and data are distributed, which is set by the controller of the center server 81); a time/date of a user's timetable/schedule that is managed by the center server 81; and a user request (for example, a request for distribution of programs or data from the center server 81). Note that the five determination items can be suitably combined. For example, by combining two or more of the determination items among the five determination items, it is possible to create 26 types of combination.

Further, when the intention determination portion 87 determines whether or not the user has the remote control operation intention based upon the position, the intention determination portion 87 determines whether the present position of the vehicle 11 is within the registered position area. Note that, in the case that it is determined whether or not the user has the remote control operation intention based upon the time/date pre-set by the user or the time/date pre-registered in the center server 81, the intention determination portion 87 determines whether the present time is the predetermined time/date based upon a clock, not shown. Further, in the case that it is determined whether or not the user has the remote control operation intention based upon the existence of the user request, the intention determination portion 87 determines whether or not the user request has been received from the vehicular navigation device 15 prior to the time point when the OFF information is received by the communication device 86.

Next, the flow chart will be explained. First, the flow chart shown in FIG. 14 will be described.

In step S61, it is determined whether the accessory signal has switched from ON to OFF. In the case that switching to OFF has been executed, step S62 is proceeded to; in the case that switching to OFF has not been executed, waiting is executed.

In step S62, the OFF information is transmitted to the center server 81 from the vehicular navigation device 15.

In step S63, it is determined whether the user has the remote control intention. In the case that they have the remote control operation intention, step S64 is proceeded to; in the case they do not have the remote control operation intention, step S65 is proceeded to.

In step S64, the power supply control portion 51 supplies electric power to the start-up request receiving circuit 52 or the communication device 58, based on the determination result of the center server 81.

In step S65, the power supply control portion 51 interrupts the supply of electric power to the start-up request receiving circuit 52 or the communication device 58 based on the determination result of the center server 81.

In this manner, in this embodiment, when the center server 81 determines that the user has the remote control operation intention and transmits this determination result to the communication device 58 of the vehicular navigation 15, the power supply control portion 51 supplies the electric power or interrupts the supply of electric power to the start-up request receiving circuit 52 or the communication device 58. Accordingly, the configuration of the vehicular navigation device 15 can be made more compact, and it is possible to reduce the manufacturing cost thereof.

Next, a fourth embodiment of the invention will be explained. Note that structural members that are the same as those of the first to third embodiments are denoted with the same reference numerals, and an explanation thereof is omitted. Further, an explanation of operations and effects that are the same as those of the first to third embodiments is also omitted. FIG. 15 shows a configuration of a power supply management system for an on-board device of the fourth embodiment of the invention; and FIG. 16 shows a configuration of the power supply management system for an on-board device of the fourth embodiment of the invention when the on-board device is a vehicular navigation device.

The power supply management system for an on-board device of this embodiment, as shown in FIG. 15 and FIG. 16, is different to the power supply management system for an on-board device of the first embodiment with respect to the point that a power supply capability determination portion 59 is provided instead of the intention determination portion 57. In this example, the power supply control portion 51 is configured such that, when the power supply capability determination portion 59 determines that there is electric power supply capability based on a determination as to whether the main power supply 55 that acts as the power supply is capable of supplying electric power, supply of electric power from the main power supply 55 to the start-up request receiving circuit 52 is permitted based on the determination of the power supply capability determination portion 59. In other words, the power supply control portion 51 is configured such that: when the power supply capability determination portion 59 determines that there is electric power supply capability based upon determination of whether or not there is electric power supply capability using information that indicates an environmental condition or the capability of the power supply, electric power is supplied to the start-up request receiving circuit 52; and when the power supply capability determination portion 59 determines that there is no electric power supply capability, the supply of electric power to the start-up request receiving circuit 52 is interrupted.

Further, the power supply capability determination portion 59 determines whether or not the main power supply 55 that acts as the power supply has electric power supply capability based upon the information indicating the environmental condition or the capability of the power supply. In this example, the environmental condition is a temperature outside of the vehicle 11, namely, an outside temperature. In the case that the outside temperature is equal to or above a predetermined value, the power supply capability determination portion 59 determines that there is electric power supply capability. When the main power supply 55 is the vehicle battery, generally, electric power supply capability thereof is strongly influenced by temperature, and thus when the temperature becomes cold it becomes impossible to supply sufficient electric power. In this case, the power supply capability determination portion 59 determines whether or not the main power supply 55 has electric power supply capability based upon the outside temperature of the vehicle 11. If the outside temperature is equal to or above a predetermined temperature, for example, -10 (°C), it is determined that there is electric power supply capability; and if the outside temperature is less than the predetermined temperature, it is determined that there is not electric power supply capability. Note that an engine control device, not shown, of the vehicle 11, usually detects the outside temperature in order to supply an appropriate air-fuel mixture to the engine. Accordingly, it is possible for the power supply capability determination portion 59 to utilize the outside temperature detected by the engine control device.

Moreover, the information that indicates the capability of the power supply is an inter-terminal voltage of the main power supply 55, an electrolyte volume of the main power supply 55, or a usage period of the main power supply 55. In the case that there is electric power supply capability, namely, the State of Charge (SOC) is sufficiently high, an open terminal voltage taken as the inter-terminal voltage shows a reference value, but in the case that the SOC falls, a low value is shown. Here, if the inter-terminal voltage is equal to or above a predetermined value, it can be determined that electric power supply capability of the main power supply 55 is sufficiently high; alternatively, if the inter-terminal voltage is below the predetermined value, it can be determined that electric power supply capability of the main power supply 55 in not sufficiently high. For example, in the case that the main power supply 55 is a vehicle battery with a reference value for inter-terminal voltage of 12 (V), generally, when the inter-terminal voltage is below 10 (V), it is difficult to start the engine. Accordingly, the power supply capability determination portion 59 determines whether or not the main power supply 55 has electric power supply capability based on the inter-terminal voltage of the main power supply 55; in the case that the inter-terminal voltage is equal to or more than 10 (V), which is the necessary voltage for the engine to be started, it is determined that there is electric power supply capability; in the case that the inter-terminal voltage is lower than the predetermined value, it is determined that there is not electric power supply capability. Note that a warning device, not shown, of the vehicle 11 normally detects the inter-terminal voltage of the main power supply 55 and issues a warning when the inter-terminal voltage is low. Accordingly, the power supply capability determination portion 59 can utilize the inter-terminal voltage detected by the warning device.

Further, in the case that the main power supply 55 uses electrolyte, as in the case of a vehicle battery, when the electrolyte volume falls, adequate functioning is no longer possible and the power supply capability reduces. In this case, the power supply capability determination portion 59 determines whether the main power supply 55 has electric power supply capability based on the electrolyte volume of the main power supply 55; when the electrolyte volume is equal to or above a predetermined value, it is determined that the main power supply 55 has the electric power supply capability; when the electrolyte volume is below a predetermined value, it is determined that the main power supply 55 does not have the power supply capability. Note that the warning device normally detects the electrolyte volume of the main power supply 55 and issues a warning when the electrolyte volume is low. Accordingly, the power supply capability determination portion 59 can utilize the electrolyte volume detected by the warning device.

Further, since the main power supply 55 deteriorates with time, the power supply capability thereof gradually decreases. For example, when the main power supply 55 is a vehicle battery, it has deteriorated in a few years to the extent that the power supply capability significantly decreases. Therefore, the power supply capability determination portion 59 determines whether the main power supply 55 has electric power supply capability based on a usage period of the main power supply 55; when the usage period is a predetermined value, such as three years, or less, it is determined that the main power supply 55 has the electric power supply capability; when the usage period is longer than the predetermined value it is determined that the main power supply 55 does not have the power supply capability. Note that a timing at which the main power supply 55 is replaced is input to the warning device, and the warning device prompts replacement thereof when a usage period measured starting from the aforementioned timing becomes longer than the predetermined usage period. Accordingly, the power supply capability determination portion 59 can utilize the usage period measured by the warning device.

Further, FIG. 16 shows the configuration of the power supply management system for an on-board device 10 when the on-board device is the vehicular navigation device 15. In this embodiment, the control processing portion 71 has an integrated control processing function for the operation of the vehicular navigation device 15, and is provided with the power supply control portion 51, the start-up control portion 53, and the power supply capability determination portion 59. Note that the configuration of other sections is the same as that of the first embodiment, and thus an explanation thereof will be omitted.
P39) Next, the operation of the power supply management system for an on-board device with the above configuration will be explained.

FIG. 17 is a flow chart showing an operation of the power supply management system for an on-board device of the fourth embodiment of the invention; FIG. 18 is a flow chart showing an operation of the power supply management system for an on-board device of the fourth embodiment of the invention when the environmental condition is the outside temperature; FIG. 19 is a flow chart showing an operation of the power supply management system for an on-board device of the fourth embodiment of the invention when the information indicating electric power supply capability is the inter-terminal voltage of the power supply; FIG. 20 is a flow chart showing an operation of a power supply control portion of the fourth embodiment of the invention when the information indicating electric power supply capability is an electrolyte volume of the power supply; and FIG. 21 is a flow chart showing an operation of the power supply control portion of the fourth embodiment of the invention when the information indicating electric power supply capability is the usage period of the power supply.

Here, an explanation will be given for the case when the vehicle 11 is parked in the parking space at the user's home, and data is transmitted to the on-board device 10 via the operation terminal 14.

First, the control processing portion 71 determines whether the accessory signal of the accessory signal generation portion 56 has switched to OFF from ON. In the case it is ON, the determination is repeatedly executed. Further, in the case that switching to OFF has been executed, the power supply capability determination portion 59 determines whether or not the main power supply 55 has electric power supply capability. Next, if the power supply capability determination portion 59 determines that the main power supply 55 has electric power supply capability, the power supply control portion 51 supplies electric power to the start-up request receiving circuit 52 or the communication device 58. Further, if the power supply capability determination portion 59 determines that the main power supply 55 does not have electric power supply capability, the power supply control portion 51 interrupts the supply of power to the start-up request receiving circuit 52 or the communication device 58.

Note that, in the case that the power supply capability determination portion 59 determines whether or not there is electric power supply capability based upon the outside temperature as the environmental condition, the power supply capability determination portion 59 determines whether the outside temperature is equal to or above a predetermined temperature. Here, the predetermined temperature is set at, for example, -10 (°C). In the case that the outside temperature is equal to or above-10 (°C), the power supply capability determination portion 59 determines that the main power supply 55 has electric power supply capability, and thus electric power is supplied to the start-up request receiving circuit 52 or the communication device 58. Alternatively, if the outside temperature is less than -10 (°C), the power supply capability determination portion 59 determines that the main power supply 55 does not have electric power supply capability, and thus the power supply control portion 51 interrupts the supply of electric power to the start-up request receiving circuit 52 or the communication device 58.

Moreover, in the case that the power supply capability determination portion 59 determines whether or not there is electric power supply capability based on the inter-terminal voltage of the power supply as the information that indicates the capability of the power supply, the power supply capability determination portion 59 determines whether the inter-terminal voltage of the main power supply 55 is equal to or above a predetermined value. Here, the predetermined value is set to be, for example, 10 (V). Accordingly, in the case that the inter-terminal voltage of the main power supply 55 is equal to or more than 10 (V), the power supply capability determination portion 59 determines that the main power supply 55 has electric power supply capability. Thus, the power supply control portion 51 supplies electric power to the start-up request receiving circuit 52 or the communication device 58. In the case that the inter-terminal voltage of the main power supply 55 is lower than the 10 (V), the power supply capability determination portion 59 determines that the main power supply 55 does not have electric power supply capability. Thus, the power supply control portion 51 interrupts the supply of electric power to the start-up request receiving circuit 52 or the communication device 58.

Further, in the case that the power supply capability determination portion 59 determines whether the main power supply 55 has electric power supply capability based on the electrolyte volume of the power supply as the information indicating the capability of the power supply, the power supply capability determination portion 59 determines whether or not the electrolyte volume of the main power supply 55 is equal to or above a predetermined value. In the case that the electrolyte volume is equal to or above the predetermined value it is determined that there is electric power supply capability. Accordingly, the power supply control portion 51 supplies electric power to the start-up request receiving circuit 52 and the communication device 58. Alternatively, when the electrolyte volume is below the predetermined value, it is determined that there is not electric power supply capability. Thus, the power supply control portion 51 interrupts the supply of electric power to the start-up request receiving circuit 52 or the communication device 58.

Moreover, in the case that the power supply capability determination portion 59 determines whether or not there is electric power supply capability based upon the usage period of the power supply as the information indicating the capability of the power supply, the power supply capability determination portion 59 determines whether or not the usage period is equal to or shorter than a predetermined value. Here, the predetermined value is, for example, three years or less. Accordingly, in the case that the usage period of the main power supply 55 is three years or less, the power supply capability determination portion 59 determines that the main power supply 55 has electric power supply capability. Thus, the power supply control portion 51 supplies electric power to the start-up request receiving circuit 52 or the communication device 58. Alternatively, in the case that the usage period of the main power supply 55 is longer than three years, the power supply capability determination portion 59 determines that the main power supply 55 does not have electric power supply capability. Thus, the power supply control portion 51 interrupts the supply of electric power to the start-up request receiving circuit 52 or the communication device 58.

Here, the power supply capability determination portion 59 determines whether there is electric power supply capability based on the four determination items, namely: the outside temperature as the environmental condition, the inter-terminal voltage of the power supply, the electrolyte volume of the power supply, and the usage period of the power supply. However, it is possible to suitably combine the four determination items. For example, by combining two or more of the determination items among the four determination items, it is possible to create 11 types of combination.

P41) Next, the flow charts will be explained. First, the flow chart of FIG. 17 will be described.

In step S71, it is determined whether the accessory signal has switched from ON to OFF. In the case that switching to OFF has been executed, step S72 is proceeded to; in the case that switching to OFF has not been executed, waiting is executed.

In step S72, it is determined whether the main power supply 55 has electric power supply capability. In the case there is electric power supply capability, step S73 is proceeded to; in the case there is not electric power supply capability, step S74 is proceeded to.

In step S73, electric power is supplied to the start-up request receiving circuit 52 or the communication device 58.

In step S74, supply of electric power to the start-up request receiving circuit 52 or the communication device 58 is interrupted.

Next, an explanation will be given of the flow chart shown in FIG. 18 for when the environmental condition set for the power supply capability determination portion 59 is the outside temperature.

In step S71, it is determined whether the accessory signal has switched from ON to OFF. In the case that switching to OFF has been executed, step S72-1 is proceeded to; in the case that switching to OFF has not been executed, waiting is executed.

In step S72-1, it is determined whether the outside temperature is equal to or above the predetermined temperature. In the case that it is equal to or above the predetermined temperature, step S73 is proceeded to; in the case that it is below the predetermined temperature, step S74 is proceeded to.

In step S73, electric power is supplied to the start-up request receiving circuit 52 or the communication device 58.

In step S74, supply of electric power to the start-up request receiving circuit 52 or the communication device 58 is interrupted.

Next, an explanation will be given of the flow chart shown in FIG. 19 for when the information indicating the capability of the power supply is the inter-terminal voltage of the main power supply 55.

In step S71, it is determined whether the accessory signal has switched from ON to OFF. In the case that switching to OFF has been executed, step S72-2 is proceeded to; in the case that switching to OFF has not been executed, waiting is executed.

In step S72-2, it is determined whether the inter-terminal voltage is equal to or above the predetermined value. In the case that it is equal to or above the predetermined value, step S73 is proceeded to; in the case that it is below the predetermined value, step S74 is proceeded to.

P42) In step S73, electric power is supplied to the start-up request receiving circuit 52 or the communication device 58.

In step S74, supply of electric power to the start-up request receiving circuit 52 or the communication device 58 is interrupted.

Next, an explanation will be given of the flow chart of FIG. 20 for when the information indicating the capability of the power supply is the electrolyte volume of the main power supply 55.

In step S71, it is determined whether the accessory signal has switched from ON to OFF. In the case that switching to OFF has been executed, step S72-3 is proceeded to; in the case that switching to OFF has not been executed, waiting is executed.

In step S72-3, it is determined whether the electrolyte volume is equal to or above the predetermined value. In the case that it is equal to or above the predetermined value, step S73 is proceeded to; in the case that it is below the predetermined value, step S74 is proceeded to.

In step S73, electric power is supplied to the start-up request receiving circuit 52 or the communication device 58.

In step S74, supply of electric power to the start-up request receiving circuit 52 or the communication device 58 is interrupted.

Next, an explanation will be given of the flow chart of FIG. 21 for when the information indicating the capability of the power supply is the usage period of the main power supply 55.

In step S71, it is determined whether the accessory signal has switched from ON to OFF. In the case that switching to OFF has been executed, step S72-4 is proceeded to; in the case that switching to OFF has not been executed, waiting is executed.

In step S72-4, it is determined whether the usage period is equal to or shorter than the predetermined value. In the case that it is equal to or less than the predetermined value, step S73 is proceeded to; in the case that it is longer than the predetermined value, step S74 is proceeded to.

In step S73, electric power is supplied to the start-up request receiving circuit 52 or the communication device 58.

In step S74, supply of electric power to the start-up request receiving circuit 52 or the communication device 58 is interrupted.

Note that other sections of the operation are the same as those of the first embodiment and thus a description has been omitted.

In this manner, with this embodiment, when the power supply capability determination portion 59 determines that the main power supply 55 as the power supply has electric power supply capability, electric power is supplied to the start-up request receiving circuit 52 or the communication device 58. In this example, the power supply capability determination portion 59 determines whether or not there is electric power supply capability based on the environmental condition or the information indicating the capability of the power supply.
P43) Further, if the environmental condition is the outside temperature, the power supply capability determination portion 59 is configured such that: when the outside temperature is equal to or above the predetermined value, it is determined that the main power supply 55 has electric power supply capability; and when the outside temperature is below the predetermined value, it is determined that the main power supply 55 does not have electric power supply capability. Further, if the information indicating the capability of the power supply is the inter-terminal voltage of the main power supply 55, the power supply capability determination portion 59 is configured such that: when the inter-terminal voltage is equal to or above the predetermined value, it is determined that the main power supply 55 has electric power supply capability; and when the inter-terminal voltage is below the predetermined value, it is determined that the main power supply 55 does not have electric power supply capability. Further, if the information indicating the capability of the power supply is the electrolyte volume of the main power supply 55, the power supply capability determination portion 59 is configured such that: when the electrolyte volume is equal to or above the predetermined value, it is determined that the main power supply 55 has electric power supply capability; and when the electrolyte volume is below the predetermined value, it is determined that the main power supply 55 does not have electric power supply capability. Further, if the information indicating the capability of the power supply is the usage period of the main power supply 55, the power supply capability determination portion 59 is configured such that: when the usage period is equal to or shorter than the predetermined value, it is determined that the main power supply 55 has electric power supply capability; and when the usage period is longer than the predetermined value, it is determined that the main power supply 55 does not have electric power supply capability.

Accordingly, when the outside temperature is equal to or above the predetermined value, or when the inter-terminal voltage is equal to or above the predetermined value, or when the electrolyte volume is equal to or above the predetermined value, or when the usage period is equal to or shorter than the predetermined period, the start-up request receiving circuit 52 is driven by supply of electric power thereto, and when the start-up request is received that is transmitted from the external device 12, it is possible to cause the start-up control portion 53 to start up, at the least, a portion of the on-board device 10.

Here, the portion of the on-board device 10 that is started up by the start-up control portion 53 is, for example (in the case that the data is downloaded to the on-board device 10 and stored on a magnetic disk acting as a hard disk that is provided as a storage unit of the on-board device 10) the hard disk, the RAM 32 acting as a semi-conductor body provided as the storage unit of the on-board device 10, and the CPU 31 provided as the calculating unit thereof; further, for example, when the downloaded data is stored in the RAM 32, it is the RAM 32 and the CPU 31, or the RAM 32 alone.

In addition, when the outside temperature is less than the predetermined temperature, or when the inter-terminal voltage is less than the predetermined value, or when the electrolyte volume is less than the predetermined value, or when the usage period is longer than the predetermined period, the supply of electric power to the start-up request receiving circuit 52 or the communication device 58 is interrupted.

Accordingly, when the outside temperature is less than the predetermined temperature, or when the inter-terminal voltage is less than the predetermined value, or when the electrolyte volume is less than the predetermined value, or when the usage period is longer than the predetermined period, the supply of electric power to the start-up request receiving circuit 52 or the communication device 58 is interrupted, whereby it is possible to inhibit the discharge of the vehicle battery that acts as the main power supply 55. Further, when the outside temperature is equal to or above the predetermined value, or when the inter-terminal voltage is equal to or above the predetermined value, or when the electrolyte volume is equal to or above the predetermined value, or when the usage period is equal to or shorter than the predetermined period, the user can operate the operation terminal 14 so as to operate the on-board device 10 by remote control operation thereof, transmit data to the on-board device 10, and the like.

Accordingly, when the vehicle 11 is parked with the engine stopped, the supply of electric power to the on-board device 10 is interrupted except for when the power supply capability determination portion 59 determines that the main power supply 55 has electric power supply capability. Accordingly, it is possible to reduce discharge of the vehicle battery acting as the main power supply 55.

Next, a fifth embodiment of the invention will be explained. Note that structural members that are the same as those of the first to fourth embodiments are denoted with the same reference numerals, and an explanation thereof is omitted. Further, an explanation of operations and effects that are the same as those of the first to fourth embodiments is also omitted.

FIG. 22 shows a configuration of a power supply management system for an on-board device of the fifth embodiment of the invention.

The power supply management system for an on-board device of this embodiment, like the configuration of the second embodiment, has the center server 81, and is configured such that the data and programs are distributed to the vehicular navigation device 15 from the center server 81. However, the key point of difference from the second embodiment is that the control processing portion 71 is provided with the power supply capability determination portion 59 instead of the intention determination portion 57. Note that, with regard to other sections, the configuration is the same as that of the second embodiment, and thus an explanation thereof is omitted.

Next, a sixth embodiment of the invention will be explained. Note that structural members that are the same as those of the first to fifth embodiments are denoted with the same reference numerals, and an explanation thereof is omitted. Further, an explanation of operations and effects that are the same as those of the first to fifth embodiments is also omitted. FIG. 23 shows a configuration of a power supply management system for an on-board device of the sixth embodiment of the invention; and FIG. 24 is flow chart showing an operation of the power supply management system for an on-board device of the sixth embodiment.

In this embodiment, the vehicular navigation device 15 is not provided with the power supply capability determination portion 59, and the center server 81 has a power supply capability determination portion 88. The power supply capability determination portion 88 has the same function as the power supply capability determination portion 59. Further, the power supply control portion 51 is configured such that, when the power supply capability determination portion 88 determines that there is electric power supply capability based on a determination as to whether the main power supply 55 has electric power supply capability, supply of electric power from the main power supply 55 to the start-up request receiving circuit 52 is permitted based on the determination of the power supply capability determination portion 88. Note that, other sections of the configuration are the same as those of the fifth embodiment, and thus an explanation thereof will be omitted.

Next, the operation of the power supply management system for an on-board device of this embodiment will be described.

First, the control processing portion 71 of the vehicular navigation device 15 determines whether the accessory signal from the accessory signal generation portion 56 has switched from ON to OFF. Then, in the case of ON, the determination is repeatedly executed. Further, if the control processing portion 71 determines that switching to OFF has been executed, the communication device 58 transmits "OFF information", which indicates that the accessory signal has switched from ON to OFF, to the communication device 86 of the center server 81. Note that the OFF information may be transmitted to the communication device 86 of the center server 81 via the communication device 65 of the user residence 61.

Next, when the OFF information is received by the communication device 86, the power supply capability determination portion 88 determines whether the main power supply 55 has electric power supply capability. Then, if the power supply capability determination portion 88 determines that the main power supply 55 has electric power supply capability, the communication device 86 of the center server 81 transmits the determination result to the communication device 58 of the vehicular navigation device 15. Following this, when the determination result from the communication device 58 is transmitted to the power supply control portion 51, the power supply control portion 51 supplies electric power to the start-up request receiving circuit 52 or the communication device 58. Note that the determination result may be transmitted to the communication device 58 of the vehicular navigation device 15 via the communication device 65 at the user residence 61.

Moreover, when the power supply capability determination portion 88 determines that the main power supply 55 does not have electric power supply capability, the communication device 86 of the center server 81 transmits the determination result to the communication device 58 of the vehicular navigation device 15. Then, when the determination result is transmitted to the power supply control portion 51 from the communication device 58, the power supply control portion 51 interrupts the supply of electric power to the start-up request receiving circuit 52 or the communication device 58. Note that the determination result may be transmitted to the communication device 58 of the vehicular navigation device 15 via the communication device 65 of the user residence 61.

In this example, the power supply capability determination portion 88, like the power supply capability determination portion 59, determines whether there is electric power supply capability based on the four determination items, namely: the outside temperature as the environmental condition, the inter-terminal voltage of the power supply, the electrolyte volume of the power supply, and the usage period of the power supply. However, it is possible to suitably combine the four determination items. For example, by combining two or more of the determination items among the four determination items, it is possible to create 11 types of combination.

Further, if determination of whether there is electric power supply capability is based upon the outside temperature as the environmental condition, the power supply capability determination portion 88 determines whether the outside temperature is equal to or above the predetermined value. Further, if determination of whether there is electric power supply capability is based upon the inter-terminal voltage of the power supply as the information indicating the capability of the power supply, the power supply capability determination portion 88 determines whether the inter-terminal voltage of the main power supply 55 is equal to or above the predetermined value. Moreover, if determination of whether there is electric power supply capability is based upon the electrolyte volume of the power supply as the information indicating the capability of the power supply, the power supply capability determination portion 88 determines if the electrolyte volume is equal to or above the predetermined value. Further, if determination of whether there is electric power supply capability is based upon the usage period of the power supply as the information indicating the capability of the power supply, the power supply capability determination portion 88 determines whether the usage period of the main power supply 55 is equal to or shorter than the predetermined value.

Next, the flow chart will be explained.

In step S81, it is determined whether the accessory signal has switched from ON to OFF. In the case that switching to OFF has been executed, step S82 is proceeded to; in the case that switching to OFF has not been executed, waiting is executed.

In step S82, the OFF information is transmitted from the vehicular navigation device 15 to the center server 81.

In step S83, if it is determined whether the main power supply 55 has electric power supply capability. If there is electric power supply capability, step S84 is proceeded to; if there is not electric power supply capability, step S85 is proceeded to.

In step S84, the power supply control portion 51 supplies electric power to the start-up request receiving circuit 52 or communication device 58 based on the determination result of the center server 81.

In step S85, the power supply control portion 51 interrupts the supply of electric power to the start-up request receiving circuit 52 or the communication device 58 based on the determination result of the center server 81.

In this way, with this embodiment, when the determination result is transmitted to the communication device 58 of the vehicular navigation device 15 following determination by the center server 81 as to whether the main power supply 55 has electric power supply capability, the power supply control portion 51 supplies or interrupts electric power to the start-up request receiving circuit 52 or the communication device 58. Accordingly, it is possible for the configuration of the vehicular navigation device 15 to be simplified. As a result, the vehicular navigation device 15 can be made more compact, whereby it is possible to reduce manufacturing costs.

Note that the invention is not limited to the above described embodiments. *Modifications thereof are possible within the scope of the appended claims.*

As described in detail above, according to the invention, when required by the user of the on-board device, and when the power supply has electric power supply capability, it is possible for electric power to be supplied to the communication device so as to place it in a communication-capable state that allows remote control operation of the on-board device. At the same time, when required by the user of the on-board device, and when the power supply does not have electric power supply capability, it is possible to interrupt the supply of electric power to the communication device, whereby it is possible to reduce discharge of the vehicle battery that acts as the power supply.

### INDUSTRIAL APPLICABILITY

This invention can be applied to power supply management systems for on-board devices.

## Claims

1. A power supply management system for an on-board device (10), **characterised by** comprising:
(a) a start-up control portion (53) that controls start-up of an on-board device (10);
(b) a start-up request receiving portion (52) that, upon receipt of a start-up request from outside of the on-board device (10), causes the start-up control portion (53) to start up, at the least, a portion of the on-board device (10);
(c) an intention determination portion (57) that determines whether a user has a remote control operation intention; and
(d) a power supply control portion (51) that, when the intention determination portion (57) determines that the user has the remote control operation intention, permits supply of electric power to the start-up request receiving portion (52).

2. A power supply management system for an on-board device (10), **characterised by** comprising:
(a) a start-up control portion (53) that controls start-up of an on-board device (10);
(b) a data signal receiving portion (58) that, upon receipt of a data signal from outside of the on-board device (10), causes the start-up control portion (53) to start up, at the least, a portion of the on-board device (10);
(c) an intention determination portion (57) that determines whether a user has a remote control operation intention; and
(d) a power supply control portion (51) that, when the intention determination portion (57) determines that the user has the remote control operation intention, permits supply of electric power to the data signal receiving portion (58).

3. The power supply management system for an on-board device (10) according to claim 2, wherein
the on-board device (10) is a vehicular navigation device, and
the data signal receiving portion (58) is a portion of a wireless LAN device.

4. The power supply management system for an on-board device (10) according to claim 2, comprising:
(a) an on-board device that is provided with the start-up control portion (53), the data signal receiving portion (58) and the power supply control portion (51); and
(b) a center server (81) that is provided with the intention determination portion (57).

5. The power supply management system for an on-board device (10) according to any one of claims 1 to 4, wherein
the intention determination portion (57) determines whether or not the remote control operation intention exists based upon a condition set by the user.

6. The power supply management system for an on-board device (10) according to claim 5, wherein
the condition relates to a position.

7. The power supply management system for an on-board device (10) according to claim 6, wherein
the intention determination portion (57) determines that the user has the remote control operation intention when a present position of a vehicle (11) is within a registered position area.

8. The power supply management system for an on-board device (10) according to claim 5, wherein
the condition relates to a time-date.

9. The power supply management system for an on-board device (10) according to claim 8, wherein
the intention determination portion (57) determines that the user has the remote control operation intention when it is a predetermined time-date.

10. A power supply management system for an on-board device (10), **characterised by** comprising:
(a) a start-up control portion (53) that controls start-up of an on-board device (10);
(b) a start-up request receiving portion (52) that, upon receipt of a start-up request from outside of the on-board device (10), causes the start-up control portion (53) to start up, at the least, a portion of the on-board device (10);
(c) a power supply capability determination portion (59) that determines whether a power supply (55) has electric power supply capability; and
(d) a power supply control portion (51) that, when the power supply capability determination portion (59) determines that the power supply (55) has electric power supply capability, permits supply of electric power to the start-up request receiving portion (52).

11. A power supply management system for an on-board device (10), **characterised by** comprising:
(a) a start-up control portion (53) that controls start-up of an on-board device (10);
(b) a data signal receiving portion (58) that, upon receipt of a data signal from outside of the on-board device (10), causes the start-up control portion (53) to start up, at the least, a portion of the on-board device (10);
(c) a power supply capability determination portion (59) that determines whether a power supply (55) has electric power supply capability; and
(d) a power supply control portion (51) that, when the power supply capability determination portion (59) determines that the power supply (55) has electric power supply capability, permits supply of electric power to the data signal receiving portion (58).

12. The power supply management system for an on-board device (10) according to claim 11, wherein
the on-board device (10) is a vehicular navigation device, and
the data signal receiving portion (58) is a portion of a wireless LAN device.

13. The power supply management system for an on-board device (10) according to claim 11, comprising:
(a) an on-board device, which is provided with the start-up control portion (53), the data signal receiving portion (58) and the power supply control portion (51); and
(b) a center server (81) that is provided with the power supply capability determination portion (59).

14. The power supply management system for an on-board device (10) according to any one of claims 10 to 13, wherein
the power supply capability determination portion (59) determines whether there is electric power supply capability based upon an environmental condition.

15. The power supply management system for an on-board device (10) according to claim 14, wherein
the environmental condition is an outside temperature.

16. The power supply management system for an on-board device (10) according to any one of claims 10 to 13, wherein
the power supply capability determination portion (59) determines whether there is electric power supply capability based upon information indicating capability of the power supply (55).

17. The power supply management system for an on-board device (10) according to claim 16, wherein
the information is an inter-terminal voltage of the power supply (55), and when the inter-terminal voltage is equal to or more than a predetermined value, it is determined that there is electric power supply capability.

18. The power supply management system for an on-board device (10) according to claim 16, wherein
the information is an electrolyte volume of the power supply (55), and when the electrolyte volume is equal to or more than a predetermined value, it is determined that there is electric power supply capability.

19. The power supply management system for an on-board device (10) according to claim 16, wherein
the information is a usage period of the power supply (55), and when the usage period is equal to or shorter than a predetermined value, it is determined that there is electric power supply capability.

## Patentansprüche

1. Energiezufuhrverwaltungssystem für ein bordeigenes Gerät (10), gekennzeichnet durch
(a) einen Hochfahrsteuerabschnitt (53), der ein Hochfahren eines bordeigenen Geräts (10) steuert,
(b) einen Hochfahranforderungsempfangsabschnitt (52), der bei einem Empfang einer Hochfahranforderung von außerhalb des bordeigenen Geräts (10) den Hochfahrsteuerabschnitt (53) dazu bringt, zumindest einen Abschnitt des bordeigenen Geräts (10) hochzufahren,
(c) einen Absichtsbestimmungsabschnitt (57), der bestimmt, ob ein Benutzer eine Fernsteuerbetriebsabsicht hat, und
(d) einen Energiezufuhrsteuerabschnitt (51), der, wenn der Absichtsbestimmungsabschnitt (57) bestimmt, dass der Benutzer die Fernsteuerbetriebsabsicht hat, eine Zufuhr elektrischer Energie zu dem Hochfahranforderungsempfangsabschnitt (52) zulässt.

2. Energiezufuhrverwaltungssystem für ein bordeigenes Gerät (10), gekennzeichnet durch
(a) einen Hochfahrsteuerabschnitt (53), der ein Hochfahren eines bordeigenen Geräts (10) steuert,
(b) einen Datensignalempfangsabschnitt (58), der bei einem Empfang eines Datensignals von außerhalb des bordeigenen Geräts (10) den Hochfahrsteuerabschnitt (53) dazu bringt, zumindest einen Abschnitt des bordeigenen Geräts (10) hochzufahren,
(c) einen Absichtsbestimmungsabschnitt (57), der bestimmt, ob ein Benutzer eine Fernsteuerbetriebsabsicht hat, und
(d) einen Energiezufuhrsteuerabschnitt (51), der, wenn der Absichtsbestimmungsabschnitt (57) bestimmt, dass der Benutzer die Fernsteuerbetriebsabsicht hat, eine Zufuhr elektrischer Energie zu dem Datensignalempfangsabschnitt (58) zulässt.

3. Energiezufuhrverwaltungssystem für ein bordeigenes Gerät (10) nach Anspruch 2, wobei
das bordeigene Gerät (10) ein Fahrzeugnavigationsgerät ist, und der Datensignalempfangsabschnitt (58) ein Abschnitt eines Drahtlos-LAN-Geräts ist.

4. Energiezufuhrverwaltungssystem für ein bordeigenes Gerät (10) nach Anspruch 2, mit
(a) einem bordeigenen Gerät, das mit dem Hochfahrsteuerabschnitt (53), dem Datensignalempfangsabschnitt (58), und dem Energiezufuhrsteuerabschnitt (51) versehen ist, und
(b) einem Zentralserver (81), der mit dem Absichtsbestimmungsabschnitt (57) bereitgestellt ist.

5. Energiezufuhrverwaltungssystem für ein bordeigenes Gerät (10) nach einem der Ansprüche 1 bis 4, wobei
der Absichtsbestimmungsabschnitt (57) bestimmt, ob die Fernsteuerbetriebsabsicht besteht oder nicht basierend auf einer durch den Benutzer eingestellten Bedingung.

6. Energiezufuhrverwaltungssystem für ein bordeigenes Gerät (10) nach Anspruch 5, wobei
die Bedingung eine Position betrifft.

7. Energiezufuhrverwaltungssystem für ein bordeigenes Gerät (10) nach Anspruch 6, wobei
der Absichtsbestimmungsabschnitt (57) bestimmt, dass der Benutzer die Fernsteuerbetriebsabsicht hat, wenn eine gegenwärtige Position eines Fahrzeugs (11) innerhalb eines registrierten Positionsbereichs ist.

8. Energiezufuhrverwaltungssystem für ein bordeigenes Gerät (10) nach Anspruch 5, wobei
die Bedingung Zeit-Datum betrifft.

9. Energiezufuhrverwaltungssystem für ein bordeigenes Gerät (10) nach Anspruch 8, wobei
der Absichtsbestimmungsabschnitt (57) bestimmt, dass der Benutzer die Fernsteuerbetriebsabsicht hat, wenn es ein vorbestimmtes Zeit-Datum ist.

10. Energiezufuhrverwaltungssystem für ein bordeigenes Gerät (10), gekennzeichnet durch
(a) einen Hochfahrsteuerabschnitt (53), der ein Hochfahren eines bordeigenen Geräts (10) steuert,
(b) einen Hochfahranforderungsempfangsabschnitt (52), der bei einem Empfang einer Hochfahranforderung von außerhalb des bordeigenen Geräts (10) den Hochfahrsteuerabschnitt (53) dazu bringt, zumindest einen Abschnitt des bordeigenen Geräts (10) hochzufahren,
(c) einen Energiezufuhrfähigkeitsbestimmungsabschnitt (59), der bestimmt, ob eine Energieversorgung (55) Elektroenergiezufuhrfähigkeit aufweist, und
(d) einen Energiezufuhrsteuerabschnitt (51), der, wenn der Energiezufuhrfähigkeitsbestimmungsabschnitt (59) bestimmt, dass die Energieversorgung (55) Elektroenergiezufuhrfähigkeit aufweist, eine Zufuhr elektrischer Energie zu dem Hochfahranforderungsempfangsabschnitt (52) zulässt.

11. Energiezufuhrverwaltungssystem für ein bordeigenes Gerät (10), gekennzeichnet durch
(a) einen Hochfahrsteuerabschnitt (53), der ein Hochfahren eines bordeigenen Geräts (10) steuert,
(b) einen Datensignalempfangsabschnitt (58), der bei einem Empfang eines Datensignals von außerhalb des bordeigenen Geräts (10) den Hochfahrsteuerabschnitt (53) dazu bringt, zumindest einen Abschnitt des bordeigenen Geräts (10) hochzufahren,
(c) einen Energiezufuhrfähigkeitsbestimmungsabschnitt (59), der bestimmt, ob eine Energieversorgung (55) Elektroenergiezufuhrfähigkeit aufweist, und
(d) einen Energiezufuhrsteuerabschnitt (51), der, wenn der Energiezufuhrfähigkeitsbestimmungsabschnitt (59) bestimmt, dass die Energieversorgung (55) Elektroenergiezufuhrfähigkeit aufweist, eine Zufuhr elektrischer Energie zu dem Datensignalempfangsabschnitt (58) zulässt.

12. Energiezufuhrverwaltungssystem für ein bordeigenes Gerät (10) nach Anspruch 11, wobei
das bordeigene Gerät (10) ein Fahrzeugnavigationsgerät ist, und der Datensignalempfangsabschnitt (58) ein Abschnitt eines Drahtlos-LAN-Geräts ist.

13. Energiezufuhrverwaltungssystem für ein bordeigenes Gerät (10) nach Anspruch 11, mit
(a) einem bordeigenen Gerät, das mit dem Hochfahrsteuerabschnitt (53), dem Datensignalempfangsabschnitt (58), und dem Energiezufuhrsteuerabschnitt (51) versehen ist, und
(b) einem Zentralserver (81), der mit dem Energiezufuhrfähigkeitsbestimmungsabschnitt (59) bereitgestellt ist.

14. Energiezufuhrverwaltungssystem für ein bordeigenes Gerät (10) nach einem der Ansprüche 10 bis 13, wobei
der Energiezufuhrfähigkeitsbestimmungsabschnitt (59) bestimmt, ob es Elektroenergiezufuhrfähigkeit gibt basierend auf einer Umgebungsbedingung.

15. Energiezufuhrverwaltungssystem für ein bordeigenes Gerät (10) nach Anspruch 14, wobei
die Umgebungsbedingung eine Außentemperatur ist.

16. Energiezufuhrverwaltungssystem für ein bordeigenes Gerät (10) nach einem der Ansprüche 10 bis 13, wobei
der Energiezufuhrfähigkeitsbestimmungsabschnitt (59) bestimmt, ob es eine Elektroenergiezufuhrfähigkeit gibt basierend auf eine Fähigkeit der Energieversorgung (55) andeutender Information.

17. Energiezufuhrverwaltungssystem für ein bordeigenes Gerät (10) nach Anspruch 16, wobei
die Information eine Zwischenanschlussspannung der Energieversorgung (55) ist, und wobei, wenn die Zwischenanschlussspannung gleich wie oder größer als ein vorbestimmter Wert ist, bestimmt wird, dass es Elektroenergiezufuhrfähigkeit gibt.

18. Energiezufuhrverwaltungssystem für ein bordeigenes Gerät (10) nach Anspruch 16, wobei
die Information ein Elektrolytvolumen der Energieversorgung (55) ist, und wobei, wenn das Elektrolytvolumen gleich wie oder größer als ein vorbestimmter Wert ist, bestimmt wird, dass es Elektroenergiezufuhrfähigkeit gibt.

19. Energiezufuhrverwaltungssystem für ein bordeigenes Gerät (10) nach Anspruch 16, wobei
die Information eine Benutzungszeitdauer der Energieversorgung (55) ist, und wobei, wenn die Benutzungszeitdauer gleich wie oder kürzer als ein vorbestimmter Wert ist, bestimmt wird, dass es Elektroenergiezufuhrfähigkeit gibt.

## Revendications

1. Système de gestion d'alimentation pour un dispositif embarqué (10), **caractérisé en ce qu'**il comprend :
(a) une section (53) de commande de démarrage qui commande le démarrage d'un dispositif embarqué (10) ;
(b) une section (52) de réception de demande de démarrage qui, à réception d'une demande de démarrage provenant de l'extérieur du dispositif embarqué (10), fait que la section (53) de commande de démarrage démarre, au moins, une partie du dispositif embarqué (10) ;
(c) une section (57) de détermination d'intention qui détermine si un utilisateur a une intention de mise en oeuvre par télécommande ; et
(d) une section (51) de commande d'alimentation qui, lorsque la section (57) de détermination d'intention détermine que l'utilisateur à l'intention de mise en oeuvre par télécommande, permet la fourniture d'énergie électrique à la section (52) de réception de demande de démarrage.

2. Système de gestion d'alimentation pour un dispositif embarqué (10), **caractérisé en ce qu'**il comprend :
(a) une section (53) de commande de démarrage qui commande le démarrage d'un dispositif embarqué (10) ;
(b) une section (58) de réception de signal de données qui, à réception d'un signal de données provenant de l'extérieur du dispositif embarqué (10), fait que la section (53) de commande de démarrage démarre, au moins, une partie du dispositif embarqué (10) ;
(c) une section (57) de détermination d'intention qui détermine si un utilisateur a une intention de mise en oeuvre par télécommande ; et
(d) une section (51) de commande d'alimentation qui, lorsque la section (57) de détermination d'intention détermine que l'utilisateur à l'intention de mise en oeuvre par télécommande, permet la fourniture d'énergie électrique à la section (58) de réception de signal de données.

3. Système de gestion d'alimentation selon la revendication 2 pour un dispositif embarqué (10),
dans lequel le dispositif embarqué (10) est un dispositif de navigation pour véhicule, et
dans lequel la section (58) de réception de signal de données est une partie d'un dispositif de réseau local (LAN pour "Local Area Network") sans fil.

4. Système de gestion d'alimentation selon la revendication 2 pour un dispositif embarqué (10), comprenant :
(a) un dispositif embarqué qui est pourvu de la section (53) de commande de démarrage, de la section (58) de réception de signal de données et de la section (51) de commande d'alimentation ; et
(b) un serveur central (81) qui est pourvu de la section (57) de détermination d'intention.

5. Système de gestion d'alimentation selon l'une quelconque des revendications 1 à 4 pour un dispositif embarqué (10), dans lequel la section (57) de détermination d'intention détermine, en se basant sur une condition fixée par l'utilisateur, si l'intention de mise en oeuvre par télécommande existe ou non.

6. Système de gestion d'alimentation selon la revendication 5 pour un dispositif embarqué (10), dans lequel la condition se rapporte à une position.

7. Système de gestion d'alimentation selon la revendication 6 pour un dispositif embarqué (10), dans lequel la section (57) de détermination d'intention détermine que l'utilisateur a l'intention de mise en oeuvre par télécommande lorsque la position actuelle d'un véhicule (11) est à l'intérieur d'une zone de position enregistrée.

8. Système de gestion d'alimentation selon la revendication 5 pour un dispositif embarqué (10), dans lequel la condition se rapporte à une date-heure.

9. Système de gestion d'alimentation selon la revendication 8 pour un dispositif embarqué (10), dans lequel la section (57) de détermination d'intention détermine que l'utilisateur a l'intention de mise en oeuvre par télécommande lorsque l'on est à une date-heure prédéterminée.

10. Système de gestion d'alimentation pour un dispositif embarqué (10), **caractérisé en ce qu'**il comprend :
(a) une section (53) de commande de démarrage qui commande le démarrage d'un dispositif embarqué (10) ;
(b) une section (52) de réception de demande de démarrage qui, à réception d'une demande de démarrage provenant de l'extérieur du dispositif embarqué (10), fait que la section (53) de commande de démarrage démarre, au moins, une partie du dispositif embarqué (10) ;
(c) une section (59) de détermination de possibilité d'alimentation qui détermine si une alimentation (55) a la possibilité de fournir de l'énergie électrique ; et
(d) une section (51) de commande d'alimentation qui, lorsque la section (59) de détermination de possibilité d'alimentation détermine que l'alimentation (55) a la possibilité de fournir de l'énergie électrique, permet la fourniture d'énergie électrique à la section (52) de réception de demande de démarrage.

11. Système de gestion d'alimentation pour un dispositif embarqué (10), **caractérisé en ce qu'**il comprend :
(a) une section (53) de commande de démarrage qui commande le démarrage d'un dispositif embarqué (10) ;
(b) une section (58) de réception de signal de données qui, à réception d'un signal de données provenant de l'extérieur du dispositif embarqué (10), fait que la section (53) de commande de démarrage démarre, au moins, une partie du dispositif embarqué (10) ;
(c) une section (59) de détermination de possibilité d'alimentation qui détermine si une alimentation (55) a la possibilité de fournir de l'énergie électrique ; et
(d) une section (51) de commande d'alimentation qui, lorsque la section (59) de détermination de possibilité d'alimentation détermine que l'alimentation (55) a la possibilité de fournir de l'énergie électrique, permet la fourniture d'énergie électrique à la section (58) de réception de signal de données.

12. Système de gestion d'alimentation selon la revendication 11 pour un dispositif embarqué (10),
dans lequel le dispositif embarqué (10) est un dispositif de navigation pour véhicule, et
dans lequel la section (58) de réception de signal de données est une partie d'un dispositif de LAN sans fil.

13. Système de gestion d'alimentation selon la revendication 11 pour un dispositif embarqué (10), comprenant :
(a) un dispositif embarqué qui est pourvu de la section (53) de commande de démarrage, de la section (58) de réception de signal de données et de la section (51) de commande d'alimentation ; et
(b) un serveur central (81) qui est pourvu de la section (59) de détermination de possibilité d'alimentation.

14. Système de gestion d'alimentation selon l'une quelconque des revendications 10 à 13 pour un dispositif embarqué (10), dans lequel la section (59) de détermination de possibilité d'alimentation détermine s'il y a possibilité de fourniture d'énergie électrique en se basant sur une condition environnementale.

15. Système de gestion d'alimentation selon la revendication 14 pour un dispositif embarqué (10), dans lequel la condition environnementale est la température extérieure.

16. Système de gestion d'alimentation selon l'une quelconque des revendications 10 à 13 pour un dispositif embarqué (10), dans lequel la section (59) de détermination de possibilité d'alimentation détermine s'il y a possibilité de fourniture d'énergie électrique en se basant sur une information indiquant la possibilité de l'alimentation (55).

17. Système de gestion d'alimentation selon la revendication 16 pour un dispositif embarqué (10), dans lequel l'information est la tension aux bornes de l'alimentation (55), et dans lequel, lorsque la tension aux bornes est égale ou supérieure à une valeur prédéterminée, il est déterminé qu'il y a possibilité de fourniture d'énergie électrique.

18. Système de gestion d'alimentation selon la revendication 16 pour un dispositif embarqué (10), dans lequel l'information est un volume d'électrolyte de l'alimentation (55), et dans lequel, lorsque le volume d'électrolyte est égal ou supérieur à une valeur prédéterminée, il est déterminé qu'il y a possibilité de fourniture d'énergie électrique.

19. Système de gestion d'alimentation selon la revendication 16 pour un dispositif embarqué (10), dans lequel l'information est une durée d'utilisation de l'alimentation (55), et dans lequel, lorsque la durée d'utilisation est égale ou inférieure à une valeur prédéterminée, il est déterminé qu'il y a possibilité de fourniture d'énergie électrique.
